Europäisches Patentamt

European Patent Office

Office européen des brevets

(19)

(11) EP 0 435 284 B1

(12) EUROPEAN PATENT SPECIFICATION

(45) Date of publication and mention
of the grant of the patent:
05.03.1997 Bulletin 1997/10

(51) Int Cl.6: G06K 15/12, G06K 15/02,
G06K 15/16

(21) Application number: 90125571.1

(22) Date of filing: 27.12.1990

(54) **Image recording system**

Bildregistriersystem

Systèmes d'enregistrement d'image

(84) Designated Contracting States:
DE FR GB

(30) Priority: 27.12.1989 JP 341131/89
27.12.1989 JP 341132/89
27.12.1989 JP 341133/89
18.01.1990 JP 10194/90
19.01.1990 JP 11562/90
28.04.1990 JP 114807/90
28.04.1990 JP 114808/90
21.05.1990 JP 132152/90
21.06.1990 JP 165233/90
21.06.1990 JP 165234/90

(43) Date of publication of application:
03.07.1991 Bulletin 1991/27

(73) Proprietor: MITSUBISHI DENKI KABUSHIKI
KAISHA
Tokyo (JP)

(72) Inventors:
• Uchiumi, Toyohiro,
Denshishohin Kaihatsu Kenkyusho
Nagaokakyo-shi, Kyoto (JP)
• Miyata, Akihisa,
Denshishohin Kaihatsu Kenkyusho
Nagaokakyo-shi, Kyoto (JP)
• Chiba, Kazuhiro,
Denshishohin Kaihatsu Kenkyusho
Nagaokakyo-shi, Kyoto (JP)
• Bamba, Noriko,
Denshishohin Kaihatsu Kenkyusho
Nagaokakyo-shi, Kyoto (JP)
• Someya, Jun,
Denshishohin Kaihatsu Kenkyusho
Nagaokakyo-shi, Kyoto (JP)
• Matsuura, Tsukasa, c/o Zairyo Kenkyusho
8-chome, Amagasaki-shi, Hyogo-ken (JP)
• Sakai, Yuichi, c/o Zairyo Kenkyusho
8-chome, Amagasaki-shi, Hyogo-ken (JP)
• Suzuki, Shigehisa, c/o Zairyo Kenkyusho
8-chome, Amagasaki-shi, Hyogo-ken (JP)
• Sunada, Noboru, c/o Kyoto Jigyosho
Nagaokakyo-shi, Kyoto (JP)

(74) Representative: Pfenning, Meinig & Partner
Mozartstrasse 17
80336 München (DE)

(56) References cited:
EP-A- 0 216 536          WO-A-89/04575
DE-A- 3 818 755

• SOVIET JOURNAL OF QUANTUM
ELECTRONICS vol. 11, no. 11, September 1981,
NEW YORK, USA pages 1471-1476 BILAK ET
AL.: "NEODYMIUM YAG LASERS PUMPED BY
LIGHT-EMITTING DIODES"
• PATENT ABSTRACTS OF JAPAN vol. 8, no. 274
(M-345) 14 December 1984 & JP-A-59 143 657
• PATENT ABSTRACTS OF JAPAN vol. 12, no. 424
(M-761) 10 November 1988 & JP-A-63 159 063
• PATENT ABSTRACTS OF JAPAN vol. 11, no. 281
(M-624) 11 September 1987 & JP-A-62 080 050
• PATENT ABSTRACTS OF JAPAN vol. 14, no. 013
(M-918) 11 January 1990 & JP-A-12 59 965
• PATENT ABSTRACTS OF JAPAN vol. 13, no. 538
(M-900) 30 November 1989 & JP-A-12 21 283
• PATENT ABSTRACTS OF JAPAN vol. 6, no. 187
(M-158) 25 September 1982 & JP-A-57 093 194

**Description**

BACKGROUND OF THE INVENTION:

The present invention relates generally to an image recording system such as a printer, and more particularly, to a system for recording an image by use of the heat into which laser beams modulated in accordance with the image are converted.

PRIOR ART:

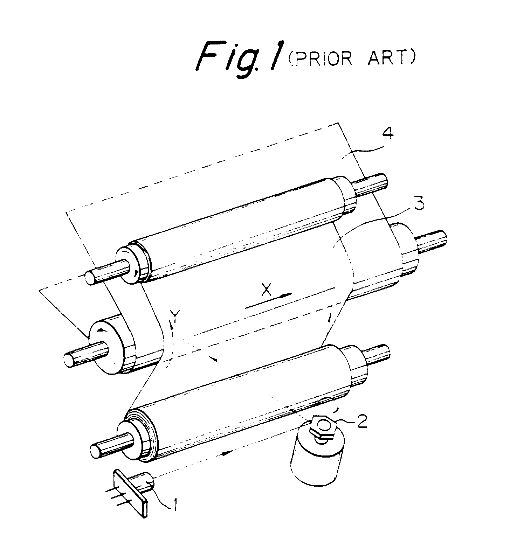

FIG. 1 illustrates a conventional image recording system disclosed in, e.g., Japanese Patent Laid-Open Publication No. 143657/1984. This system is based on a method such that an ink applied on an ink film is fused by an energy provided by a semiconductor laser; and the fused ink is transferred onto an image receiving sheet. Referring to FIG. 1, the numeral 1 designates a semiconductor laser; 2 a rotary polygon mirror (a light deflecting means) for scanning of light beams emerging from the semiconductor laser 1; 3 an ink film; and 4 an image receiving sheet. In this case, a body irradiated with the light is the ink film 3.

Following is a description of the operation. The light beams emerging from the semiconductor laser 1 undergo intensity modulation in accordance with image data. The light beams are reflectively deflected by the rotary polygon mirror 2, thus performing scanning (main scanning) on the ink film in an arrowed direction X. Simultaneously, the ink film 3 and the image receiving sheet 4 are carried in an arrowed direction Y substantially orthogonal to the main scanning direction, thus effecting auxiliary scanning. In this manner, the ink film 3 is irradiated with the light beams. The inks on light-irradiated portions of the ink film are fused in accordance with intensities of the light beams. The fused inks are transferred onto the image receiving sheet 4. Hence, the inks are two-dimensionally transferred onto the sheet 4 by repeating the main and auxiliary scanning processes. A desired two-dimensional image is thereby formed.

This type of prior art image recording system, however, presents the following problems. The heat for fusing the ink depends entirely on the energy of the semiconductor laser beams. Recording at a high velocity requires a large output semiconductor laser in the order of several hundreds of mW. The large output semiconductor laser typically emits multimode light in which a cross mode is not unitary. This causes such a problem that recording dots are not stable. Besides, a semiconductor laser providing a large output and a coherent light is difficult to manufacture, and is not only costly, but also has a short life-span.

There arise additional problems inherent in the above-mentioned image recording system of the prior art. Recording on the sheet is effected by use of the fused ink. In the case of using a sheet such as a thermosensible sheet exhibiting a large reflectance of light, the majority of incident light is reflected by the surface of sheet, with the result that recording is almost impossible. Even when performing thermal transfer recording in color in the prior art image recording system, absorptive characteristics of the laser beams differ depending on the inks. Recording in respective colors is unpracticable under the same recording conditions.

A further problem incidental to the conventional image recording system is that the ink-applied sheets are disposable.

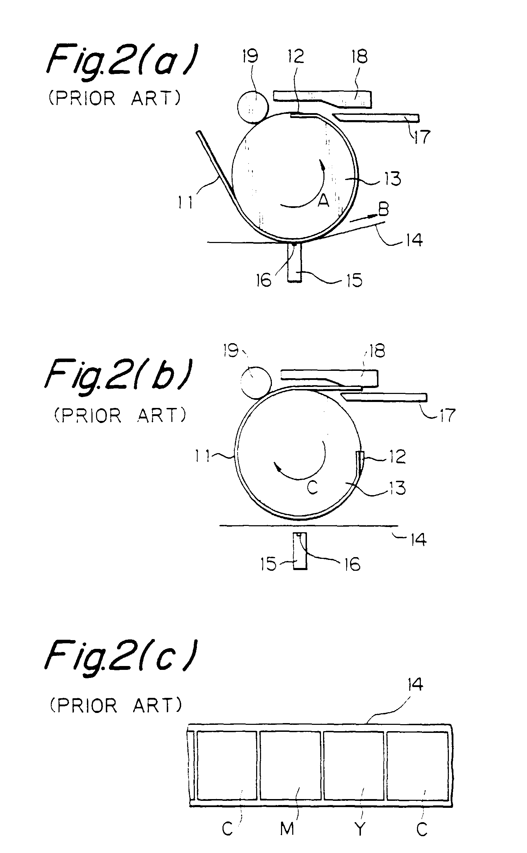

FIG. 2 is a schematic diagram depicting a prior art image recording system disclosed in, e.g., Japanese Patent Laid-Open Publication No. 52060/1986. In FIGS. 2(a) and 2(b), the numeral 11 denotes an image receiving sheet the top end of which is wound on a drum 13 while being press-held by a sheet holder 12. The sheet holder 12 is normally biased substantially towards the center of the drum 13 by an unillustrated spring member. Designated at 19 is a rotatable press-roller constantly biased substantially towards the center of the drum 13 by an unillustrated spring member. As illustrated in FIG. 2(c), inks such as cyan (C), yellow (Y) and magenta (M) are sequentially applied on a color film 14. A thermal head 15 includes a multiplicity of exothermic elements 16 rectilinearly arranged. Image receiving sheet guide members 17 and 18 guide the image receiving sheet 11 when inserting or discharging the sheet 11.

The operation will next be explained.

The drum on which the top end of the sheet 11 is held by the sheet holder 12 is rotated in an arrowed direction A. The drum 13 then stops in a record starting position. Next, the thermal head 15 presses the color film 14 and the sheet 11 so that the ink-applied surface of the film 14 contacts the sheet 11. The film 14 and the sheet 11 are press-fitted to the drum 13. After this press-fitting process, the drum 13 rotates in the arrowed direction A. Simultaneously, the exothermic elements 16 of the thermal head 15 emit heat in response to a recording signal. The ink applied on the color film 14 is fused or sublimated by the emitted heat. Transfer recording on the sheet 11 is thus effected. After the first color (cyan) recording has been finished, the thermal head 15 is separated from the drum 13. In the meantime, the drum 13 rotates in the arrowed direction A and stops in the same position as for the first color recording. The color film 14 is taken up in an arrowed direction B till a second color (yellow) ink comes to the recording position (illustration of a take-up mechanism is omitted). The thermal head 15 again presses against both the film 14 and the sheet 11. The exothermic elements 16 evolve the heat in response to the signal with the rotations of the drum 13. The second color ink is fused or sublimated to be superposed on the first color ink, thus effecting transfer recording on the image receiving sheet 11. Similarly, a third color (magenta) ink is transfer-recorded.

After finishing the recording, the thermal head 15 is separated from the drum 13. The drum 13 then rotates in the arrowed direction A up to a position in which a substantially rear end of the sheet 11 is pressed by the press roller 19. Thereafter, the drum 13 rotates in an arrowed direction C. After this step, the rear end of the sheet 11 is led in between the sheet guide members 17 and 18. The image receiving sheet 11 on which recording has been completed is then discharged. The sheet holder 12 is released (a release mechanism is not shown), whereby the sheet can be taken out.

The above-described prior art image recording system, however, has the following problems. In the color image recording, the first to third color inks are singly sequentially recorded in layers. This requires a recording time for three surfaces, which in turn causes a drop in the recording velocity. A resolution of the recorded image is determined by the size of the exothermic element due to the employment of the thermal head.

In recent years, image recording methods and apparatuses which utilize laser beams have been developed. A good number of patent applications have accordingly been made. One (Japanese Patent Laid-Open Publication No. 221283/1989) of those applications deals with an image recording system in which the laser beams are used for thermal recording.

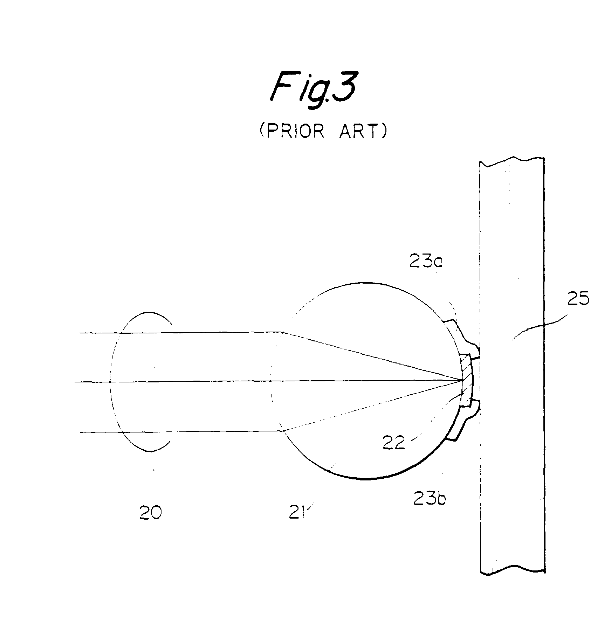

FIG. 3 is a sectional view showing an outline of structure of a photothermal converting device based on a laser recording method disclosed in the aforementioned application. In FIG. 3, the numeral 20 represents a laser beam. A glass supporting member 21 assumes a rod-like configuration adapted to condense the laser beams. A thin film resistor 22 is formed on the glass supporting member 21. First and second electrodes 23a and 23b are connected to an unillustrated voltage source. The numeral 25 denotes a thermal recording medium.

A description of the operation will hereinafter be given. A light intensity of the laser beam 20 having a predetermined beam-diameter is modulated in accordance with an image signal generated by a laser beam generating means. The thin film resistor 22 is irradiated with the laser beams passing through the glass supporting member 21. A resistance value of an irradiated portion is decreased due to a photoconductive effect or a rising temperature effect in accordance with the laser beam 20. As a result, Joule heat is evolved with voltages given by the first and second electrodes 23a and 23b. The Joule heat is transmitted to the thermal recording medium 25, thereby effecting the thermal recording.

In the photothermal converting device of the conventional laser beam image recording system, however, the first and second electrodes 23a and 23b are each composed mainly of an efficient heat conductive material such as a thin metal film. This kind of material exhibits a high level of heat radiation to parts other than the irradiated portions. Hence, a quantity of heat transmitted onto the thermal recording medium is resultantly reduced.

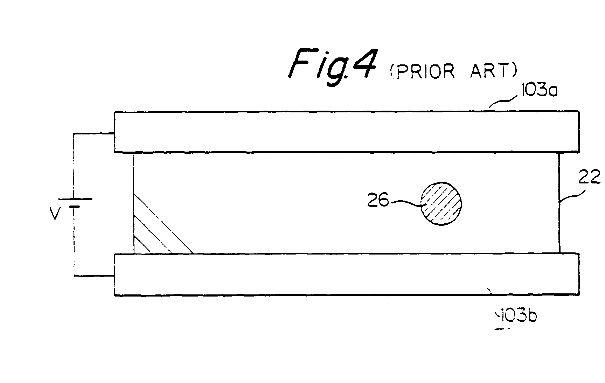

Turning to FIG. 4, there is shown a state where the laser beam 20 is condensed by the glass supporting member 21 at the thin film resistor 22 of the conventional photothermal converting device, and the resistor 22 is thus irradiated with the laser beam having a predetermined beam-diameter 26. As illustrated in FIG. 4, when the thin film resistor 22 is irradiated with the laser beam of the beam-diameter 26 smaller than a width of the resistor 22, resistance values in the vicinities of the first and second electrodes 23a and 23b do not decrease. For this reason, there can not be expected an exothermic effect given by a voltage V applied from the first and second electrodes 23a and 23b. A problem arises, wherein control over both a size of the beam-diameter and scanning for accurate irradiation of the beam is required to induce the exothermic effect by the voltage V under such irradiating conditions.

A configuration of a prior art image recording apparatus is shown in FIG. 1. Ink-melting heat depends entirely on an energy of semiconductor laser beams. For this reason, a semiconductor laser having a large output on the order of several hundreds of mW is required for speeding up the record. This large output semiconductor laser typically emits multimode beams in which the lateral mode is not single. This presents a problem in which the recording dots are not stable. It is difficult to prepare a large output and coherent semiconductor laser. This in turn causes such problems that this type of semiconductor laser is rather expensive and has a short life.

The document JP-A-1 259 965 discloses an image recording system conprising all the features of the preamble of claim 1.

It is a first object of the present invention to provide an image recording system capable of recording an image without requiring a highly expensive, large output semiconductor laser for emitting coherent light.

It is a second object of the invention to provide an image recording system employing a laser beam source and capable of recording an image onto a thermosensible sheet and effecting color thermal transfer recording in each color under the same recording conditions.

It is a third object of the invention to provide an image recording system which enables faster image recording in addition to the second object given above.

It is a fourth object of the invention to provide a color image recording system capable of reducing a recording time by recording three color inks with a laser almost at the same moment and performing a recording free of resolution without being restrained by dot sizes as in the case of an exothermic resistor of a thermal head.

It is a fifth object of the invention to provide a photothermal converting device capable of performing a photothermal conversion with a high degree of efficiency regardless of required scanning accuracy or spot sizes of laser beams.

It is a sixth object of the invention to provide a photothermal converting device capable of performing photothermal conversion while emitting heat simultaneously in a plurality of regions regardless of required scanning accuracy or the spot sizes of the laser beams.

The invention is set forth in claim 1.

Other objects and advantages of the present invention will become apparent during the following discussion taken in conjunction with the accompanying drawings, in which:

FIG. 1 is a view schematically illustrating a prior art printer;

FIGS. 2(a) through 2(c) are views showing operations of a prior art image recording system;

FIG. 3 is a view depicting a prior art photothermal converting device using laser beams;

FIG. 4 is a view showing a heating unit in a prior art photothermal converting device;

FIG. 5 is a view showing a printer in a first embodiment of the invention;

FIGS. 6(a) and 6(b) are views each showing a part of the photo-thermal converting means used in the first embodiment of the invention;

FIG. 7 is a view showing the photothermal converting means employed in the first embodiment of the invention;

FIG. 8 is a block diagram showing preheat temperature control in the first embodiment of the invention;

FIG. 9 is a view depicting a printer in a second embodiment of the invention;

FIG. 10 is a plan view showing a color film used in the second embodiment of the invention;

FIGS. 11 to 13 are diagrams showing a relationship between the laser beams and inks on the color film when recording Y Y, Y M and M C in the second embodiment of the invention;

FIG. 14 is a diagram illustrating a printing signal generating unit in the second embodiment of the invention;

FIG. 15 is a diagram showing a pulse width modulating unit in the second embodiment;

FIG. 16 is a diagram showing a relationship between OD and $\underline{n}$:

FIGS. 17(a) and 17(b) are diagrams each depicting a delay circuit;

FIG. 18 is a diagram showing a relationship between a scanning length L and Lo;

FIG. 19 is a view depicting a photothermal converting device employed in the printer in a third embodiment of the invention;

FIG. 20 is a view illustrating a photothermal converting device used in a fourth embodiment of the invention;

FIG. 21 is a view showing a fifth embodiment of the invention;

FIG. 22 a block diagram showing a highly efficient photothermal converting device in a sixth embodiment of the invention;

FIG. 23 is a view depicting a state where two laser beams having two sizes of beam diameters are incident upon the photothermal converting device in the sixth embodiment of the invention;

FIG. 24 is a perspective view showing a seventh embodiment of the invention;

FIGS. 25(a) and 25(b) are block diagrams showing a highly efficient photothermal converting device in an eighth embodiment of the invention;

FIGS. 26(a) and 26(b) views showing a ninth embodiment where the present invention is applied to an image recording system; and

FIG. 27 is a view showing a tenth embodiment of the invention.

DETAILED DESCRIPTION OF THE PREFERRED EMBODIMENTS:

Illustrative embodiments of the present invention will hereinafter be described with reference to the accompanying drawings.

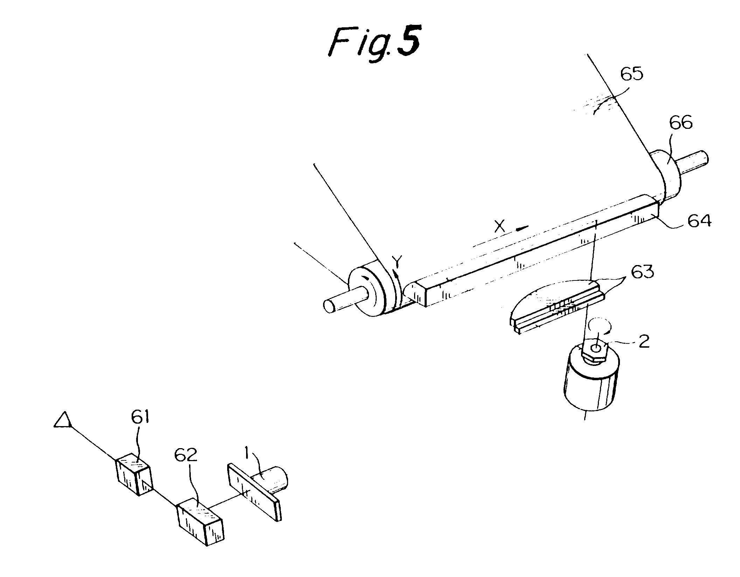

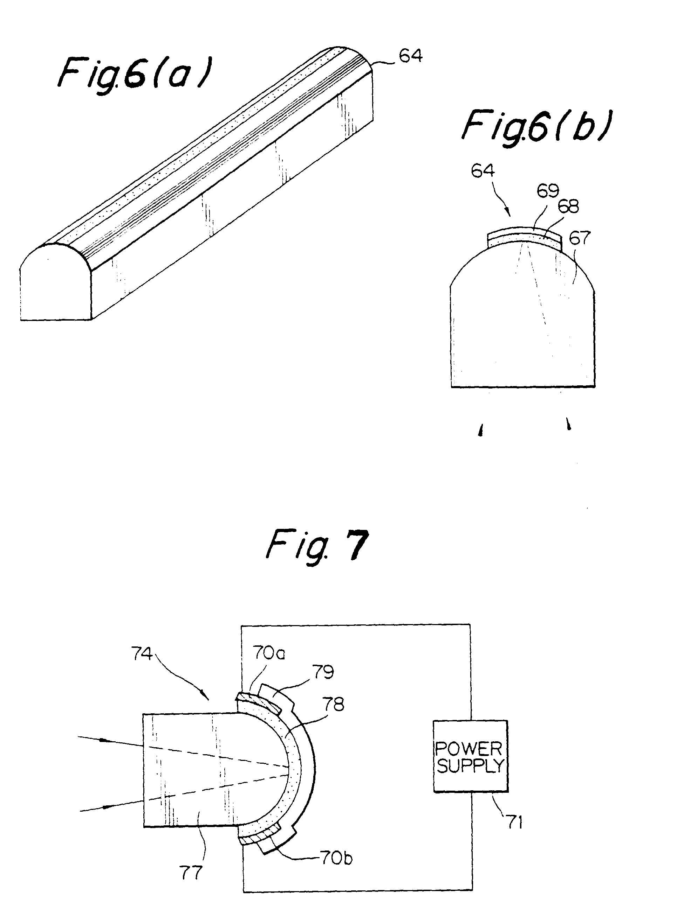

FIG. 5 illustrates an image recording system. Referring to FIG. 5, the numeral 1 represents a semiconductor laser; 2 a rotary polygon mirror; and 61 a printing signal generating means associated with the image. Designated at 62 is a semiconductor laser driving means for modulating the intensities of the laser beams emerging from the semiconductor laser 1 in response to the recording image signals output from the printing signal generating means 61. An optical system (hereinafter referred to as a light converging system) 63, consisting of an f.θ lens, for condensescanning. The numeral 64 represents a photothermal converting means. FIG. 6(a) shows a configuration of a part of this means 64, and FIG. 6(b) shows a section thereof. Referring to FIG. 6(b), a glass base 67 has a convex surface which contacts a thermosensible sheet 65. A carbon layer 68 and a anti-abrasion layer 69 are laminated on the central part of the convex surface of the glass base 67. The thermosensible sheet 65 is press-held by the photothermal converting means 64 and the platen roller 66.

The operation will be described.

An image signal $\underline{s}$ from outside input to the printing signal generating means 61. The image signal $\underline{s}$ is, after undergoing a predetermined process (a time base conversion), input to the semiconductor laser driving means 62. The driving means 62 works to modulate intensities of the laser beams of the semiconductor laser 1 in accordance with the recording image signals transmitted from the printing signal generating means 61. The intensity-modulated light beams are reflectively deflected by the rotary polygon mirror 2. Thereafter, the light beams are converted into convergent light beams by means of the light converging system 63. The convergent light beams are incident on the photothermal converting means 64 and employed for scanning (main scanning) in an arrowed direction x. In this photothermal converting means 64, the incident laser beams traveling through the glass base 67 are absorbed by the carbon layer 68, thereby evolving the heat. The heat evolved is transmitted via the anti-abrasion layer 69 to the thermosensible sheet 65. Recording dots are then formed, and the recording in the main scanning direction is thereby effected. Simultaneously, the thermosensible sheet 65 is carried in an arrowed directions Y substantially orthogonal to the main scanning direction as the platen roller 66 rotates. The auxiliary scanning is thus performed.

The light beams incident on the photothermal converting means 64, wherein the beams are converted into the heat in accordance with the intensities thereof. The heat in turn causes the recording to be effected on the thermosensible sheet 65. The recording is two-dimensionally effected on the thermosensible sheet 65 by repeating the main and auxiliary scanning processes. A desired two-dimensional image is thus formed.

The photothermal converting means 64 will next be explained.

This photothermal converting means 64 is constructed by laminating the carbon layer 8 on the glass base 67. In this case, the emission of heat larger than the incident energy by the laser beams does not take place. The evolution of heat greater than the incident energy by the laser beams may involve the use of photothermal converting means disclosed in e.g., the preceding applications made by the present applicant (Japanese Patent Applications Nos. 47333/1988 and 88527/1988, titled "PHOTOTHERMAL CONVERTING DEVICE", filed on December 27, 1988). These photothermal converting means are arranged such that an amount of heat generated is amplified by making the laser beams incident. Superlinear (non-linear) electric power or heat with respect to the variations in the linear light intensity is generated. In this case, it is feasible to form a sufficient number of recording dots even when the power emitted from the semiconductor laser 1 is small.

The present invention is applicable to the system for modulating the intensities of the laser beams of the semiconductor laser 1. This invention is also applicable to a system in which the laser beams are made constant, and a pulse width and the number of pulses are varied.

Another thermal recording method which does not exclusively use the thermosensible sheet is as follows. Applied on an ink film are wax type thermal transfer medium using; e.g., color dyes and a sublimation type thermal transfer medium using sublimating color dyes. This ink film and the image receiving sheet are press-held between the photothermal converting means 64 and the platen roller 66. In this state, color image recording can be executed. In general, if the photothermal converting means 64 is not employed for the color image recording, the light absorptive characteristic in the wavelength ($\lambda \fallingdotseq 800$ nm or thereabouts) of the semiconductor laser beam differs with respect to Y (yellow), M (magenta) and C (cyan). Hence, it is almost impossible to record the image under the same recording conditions. In contrast with this, when using the photothermal converting means 64 as in the present invention, the same recording conditions can be given to the respective colors. The good color image recording can be effected.

Turning to FIG. 7, there is illustrated a construction according to the invention in which a preheat function is added to the photothermal converting means of FIG. 6 (b), The numeral 77 denotes a glass base having a convex surface which contacts the thermosensible sheet. A carbon layer 78 and an anti-abrasion layer 79 are laminated on the convex surface. Electrodes 70a and 70b supply the carbon layer 78 with the electric power from a power supply 71. The thermosensible sheet 65 is press-held by a photothermal converting means 74 and a platen rollers 66.

The operation of the thus constructed photothermal converting device will be described.

In this photothermal converting means 74, the carbon layer 78 is supplied with the electric power from the electrodes 70a and 70b, thereby generating Joule heat. The thermosensible sheet 65 is preheated by the Joule heat. In this state, as discussed above, the incident laser beams through the glass base 77 from the light converging system are absorbed by the carbon layer 78. Heat is thereby generated. The heat thus generated is transmitted via the anti-abrasion layer 79 to the thermosensible sheet, and the recording dots are formed. In consequence, the recording is carried out in the main scanning direction.

In the above case, the thermosensible sheet is preheated, as a result of which an adequate number of recording dots can be formed even when the power emitted from the semiconductor laser 1 is small.

It should be noted that according to an experiment, approximately a one-figure reduction in the recording time could be attained by adding the preheat function of nearly 30 degrees with respect to room temperature.

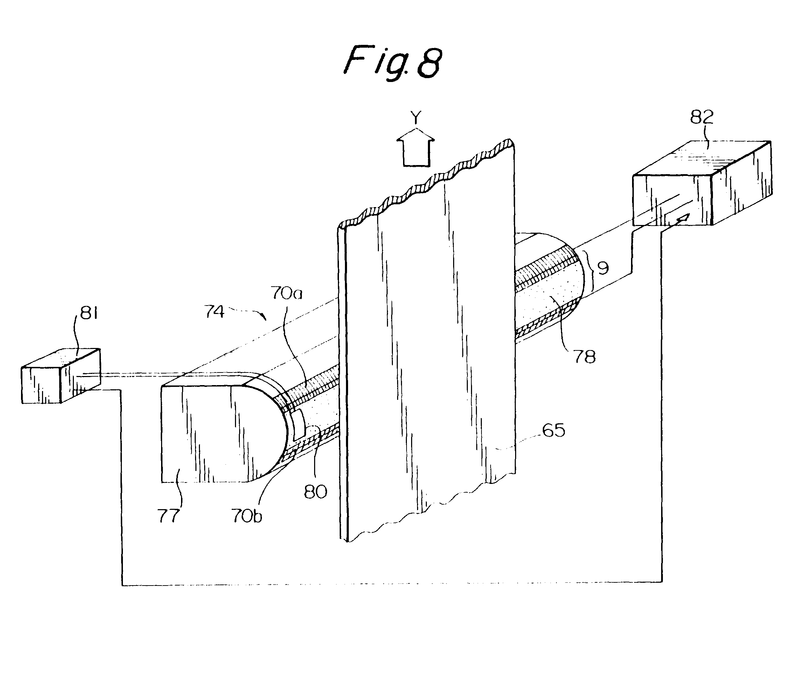

Moreover, in the embodiment of FIG. 7, as illustrated in FIG. 8, a temperature sensor 80 and a temperature control circuit 81 are added. With this arrangement, a preheat temperature and a temperature monitor of the carbon layer 78 are externally controllable. The temperature sensor 80 is a thermocouple or a thermistor capable of taking out a temperature value of the carbon layer 78 as a voltage value. The temperature control circuit 81 compares the voltage value with a voltage value corresponding to a set temperature. In regards to this comparative value, ON-OFF signals of a power supply 82 are output, thereby keeping the preheat temperature constant.

In the embodiment discussed above, there has been exemplified the carbon layer 78 as a material exhibiting a capacity to absorb the laser beams and emit heat by electrification. As a substitutes for this carbon layer a metal oxide layer, for example, may be employed. Materials each having such a characteristic as to simultaneously perform the light absorptive function and the preheat function are all usable.

As described above, the image recording system in the first embodiment provides the following advantages. The system comprises the photothermal converting means capable of providing preheat, whereby the energy of the laser beams can be converted into heat without depending on the light absorptive characteristic of the recording medium. Hence, recording can be effected at a high velocity not only by a thermosensible recording method but also by a thermal recording method such as the wax type thermal transfer recording and the sublimation type thermal transfer recording.

Next, a second embodiment of the invention will hereinafter be explained with reference to the accompanying drawings.

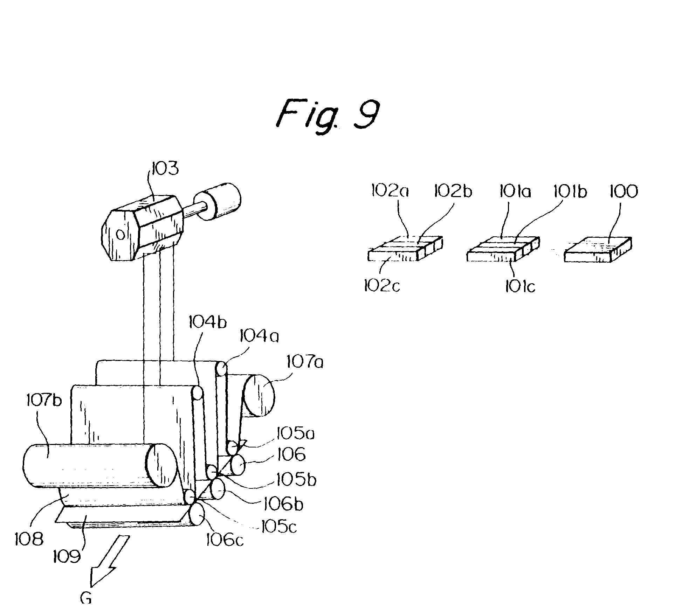

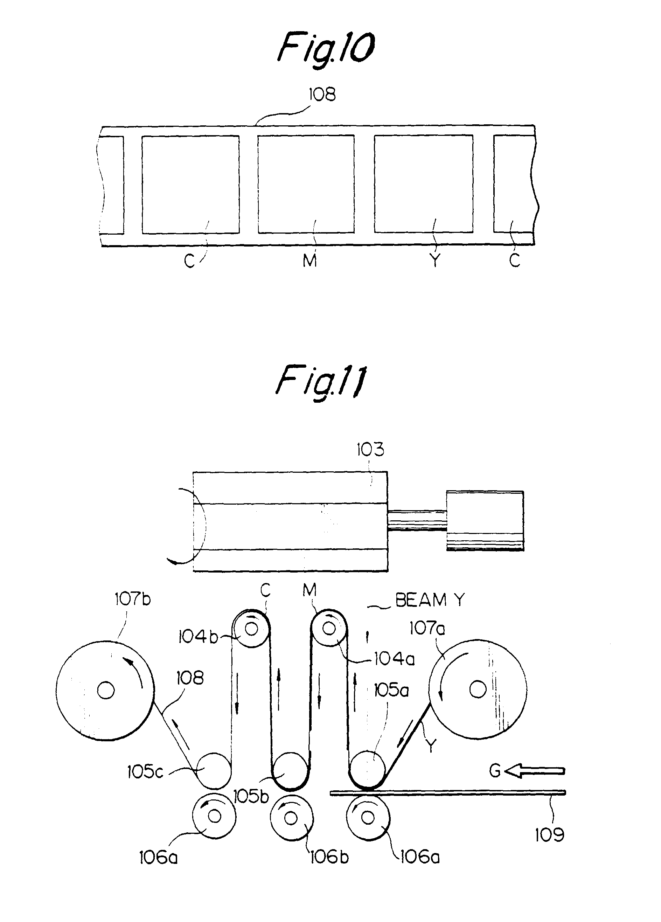

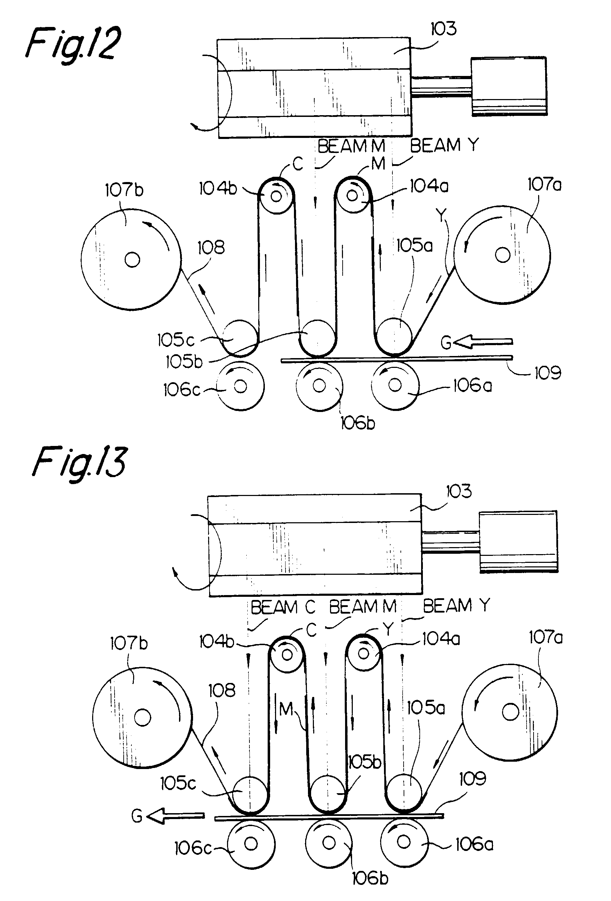

FIG. 9 depicts an image recording system in the second embodiment of the invention. Turning to FIG. 10, there is illustrated a color film available for this system of FIG. 9. A case where three light beams are employed will herein be mentioned. In the Figures, the numeral 100 designates a printing signal generating unit. First, second and third light sources 102a, 102b and 102c (hereinafter referred to as a Y light source, an M light source and a C light source) each incorporate a semiconductor laser. First, second and third drivers 101a, 101b and 101c (hereinafter referred to as a Y driver, an M driver and a C driver) serve to drive the Y light source 102a, the M light source 102b and the C light source 102c on the basis of printing signals output from the printing signal generating unit 100. Designated at 103 is a reflective deflector like a polygon mirror for reflectively deflecting beams of light emerging from the Y light source 102a, the M light source 102b and the C light source 102c, respectively. The reference numeral 108 denotes a color film on which, as illustrated in FIG. 13, the inks of yellow (Y), magenta (M) and cyan (C) are sequentially applied. Bending pins 104a and 104b work to bend the color film 108. The symbols 105a, 105b and 105c represent press-fitting members. Rollers 106a, 106b and 106c receive the press-fitting members 105a through 105c, respectively. An image receiving sheet 109 is held between the press-fitting members 105a to 105c and the rollers 106a to 106c. In this state, the sheet 109 is carried in a direction G. Film rollers 107a and 107b feed out and take up the color film 108.

The operation will next be explained.

The printing signal generating unit 100 outputs printing signals, as its outputs, corresponding to the respective colors such as yellow (hereinafter abbreviated to Y), magenta (M) and cyan (C). The printing signals of Y, M and C are converted into modulation signals corresponding to the individual colors in the Y driver 101a, the driver 101b and the C driver 101c. The Y light source 102a, the M light source 102b and the C light source 102c are driven in accordance with the modulation signals. The Y light source 102a, the M light source 102b and the C light source 102c are defined as those each having a function to shift a condensing spot position in accordance with a deflection angle of the light beam. These light sources are disclosed in Japanese Patent Application Nos. 203663/1989 (JP-A-3 066 037), 203664/1989 (JP-A-3 066 036) and 203666/1989 (JP-A-3 066 038) previously made by the present applicant. The light beams emerge from the Y light source 102a, the M light source 102b and the C light source 102c. The light beams are, after being incident on the press-fitting members 105a through 105c, reflectively deflected by the reflective deflector 103 so as to scan the inks of Y, M and C on the color film 108. In this case, the press-fitting members 105a to 105c are conceived as those each having a function to convert the light beams into superlinear (non-linear) heat. Those press-fitting members are disclosed in Japanese Patent Application Nos. 47333/1988 (JP-A-1 221 283) and 88527/1988 (JP-A-1 259 965), titled "PHOTOTHERMAL CONVERTING DEVICE", filed on December 27, 1988, which was previously made by the present applicant. The press-fitting members 105a to 105c, after the light beams have been incident, generate heat in the portions irradiated with the light beams. The heat generated is transmitted onto the color film 108. The heat acts to fuse or sublimate the inks applied on the color film 108 and are thereby transfer-recorded on an image receiving sheet 109.

The operation during printing will be described in detail with reference to FIGS. 11 through 13.

FIGS. 11 through 13 each show a situation in which the color film 108 and the sheet 109 are carried. The color film 108 is sequentially carried on such a route as a film roller A107a, a press-fitting member Y105a, a bending pin A104a, a press-fitting member M105b, a bending pin B104b, a press-fitting member C105c and a film roller B107b. The ink Y on the color film 108 at first reaches a transfer starting position of the image receiving sheet 109. At this time, the irradiation of the light beam Y modulated by the Y driver 101a takes place. In consequence of this, a recording image of the ink Y is formed on the sheet 109. The color film 108 is carried out concurrently with the recording of the ink Y. Subsequently, when the ink m on the film 108 comes to a transfer starting position of the sheet 109, the irradiation of the light beam M modulated by the M driver 101b is executed. A recording image of the ink M is superposed on the previously formed recording image of Y. The color film 108 is carried concurrently with the recording of the ink Y and the ink M superposed thereon. When the ink c on the film 108 reaches a transfer starting position of the image receiving sheet 109, the irradiation of the light beam C modulated by the C driver 101c is carried out. A recording image of the ink C is superposed on the previously formed recording images of Y and M. In this manner, the recording of Y, M and C takes place sequentially. At a stage of finishing the recording of C, the color image recording operation on the sheet 109 is completed.

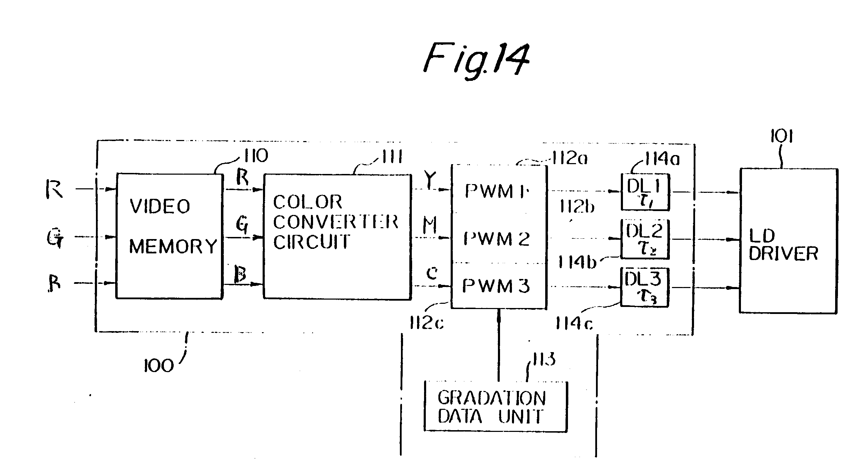

The following is a detailed description of the printing signal generating unit 100 in conjunction with FIGS. 14 through 16.

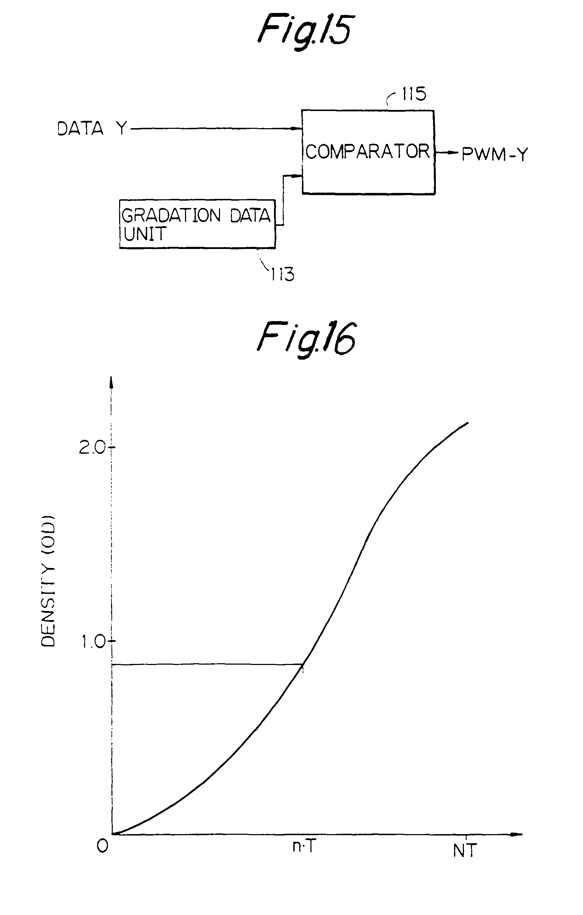

Referring to FIG. 14, the numeral 110 indicates a video memory. Designated at 111 is a color convertor circuit for converting signals R (red), G (green) and B (blue) sequentially read from the video memory 110 into signals Y (yellow), M (magenta) and C (cyan). First, second and third Pulse width modulators 112a, 112b and 112c (hereinafter abbreviated to PWM1, PWM2 and PWM3) output pulse width modulating signals of the light beams on the basis of the gradation data held by a gradation data unit 113. Delay circuits 114a, 114b and 114c (hereinafter abbreviated to DL1, DL2 and DL3) delay the respective pulse width modulating signals output from the PWM1 (112a) through PWM3 (112c). Referring to FIG. 15, the numeral 115 denotes a comparator.

Referring back to FIG. 14, the image signals of R, G and B are taken in the video memory 110. Data R, G and B per pixel are read from the video memory 110 and input to the color convertor circuit 111. The input data R, G and B per pixel are color-converted into data Y, M and C. The data Y, M and C are input to the PWM1 (112a) through PWM3 (112c), respectively.

The pulse width modulation in the data Y will be described as follows. The data Y is input to the comparator 115 together with the gradation data given from the gradation data unit 113 incorporating a ROM. An output thereof is given forth as a pulse width modulating signal. A gradation density OD is, a shown in FIG. 16, expressed such as:

$$OD \fallingdotseq T \times P \times f(n)$$

where P is the constant optical power, T is the fundamental pulse width T for controlling the emission of heat and N is the total number of the fundamental pulse widths T. In this formula, however, $0 \leqq n \leqq N$. Hence, there may be generated such a pulse width modulating signal as to obtain a gradation density corresponding to the data Y. This can be actualized on condition that n is the variable.

The operations described above are also effected on M and C, whereby the records of Y, M and C are attainable with desired gradation densities OD.

As explained earlier, appropriate delays are given to the data Y, M and C (hereinafter referred to as PWM-Y, PWM-M and PWM-C, respectively) which each have undergone the pulse width modulation on the basis of the gradation data. As a result, printing processes of Y, M and C are carried out. At this time, T1, T2 and T3 are defined as delay quantities (time). T1 is the delay quantity from the generation of PWM-Y to the initiation of printing of Y. T2 is the delay quantity from the generation of PWM-M to the initiation of printing of M. T3 is the delay quantity from the generation of PWM-C to the initiation of printing of C. These delay quantities (time) are quantities proportional to physical distances between the print starting positions of Y, M and C. Any one of these three delay quantities is allowed to be 0.

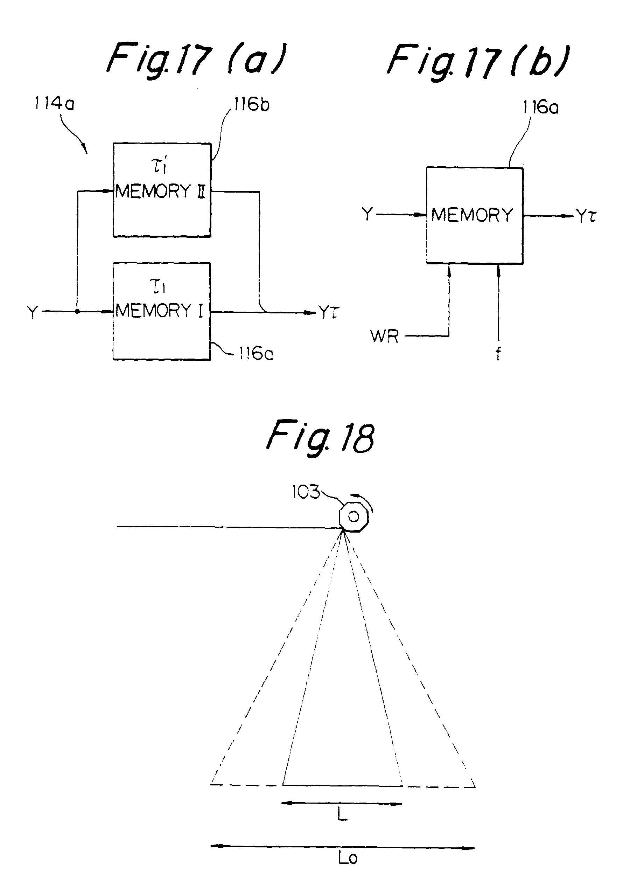

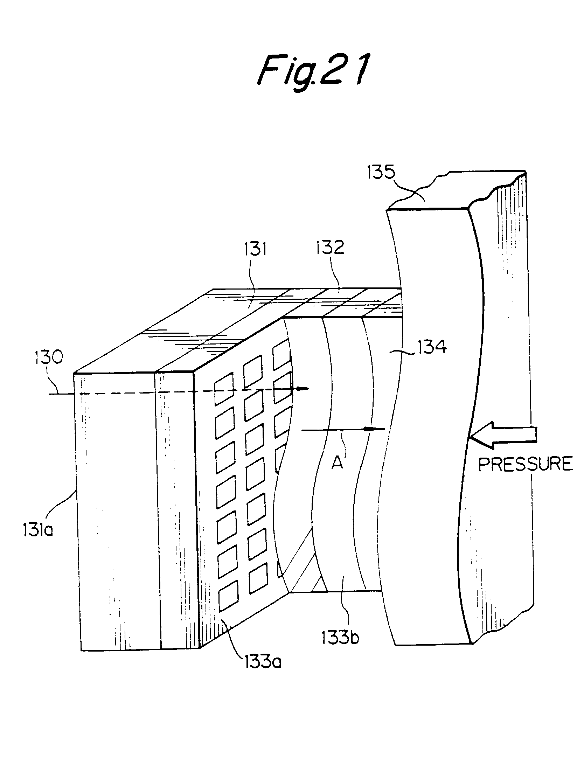

The following is a description of an embodiment in which a size of an image to be recorded is arbitrarily varied. In this embodiment, a delay circuit DL1 is composed of a plurality of memories. The data Y is, as illustrated in FIG. 17(b), written to each memory by a write clock WR. Delay data Yτ is read by a read clock f. FIG. 17(a) shows an example where the delay circuit consists of these two memories. Writing and reading operations are alternately repeated with respect to the two memories I116a and II116b. In relation to a read clock fo employed for ordinary 1-line scanning, the read clock f used for the reading operation is set such as f = m·fo. At this time, the 1-line data Y accumulated in the memory I116a are read by the clocks f to effect the recording. During this recording operation, the next 1-line data Y are written into the memory II116b. Subsequently, the next-line data Y accumulated in the memory II116b are read by the clocks f to thereby perform the recording. In the meantime, the next-line data Y are written to the memory I116a. These operations are repeated, whereby the recording can be performed in a relationship such as L = (1/m) Lo in relation to 1-line scanning Lo shown in FIG. 21. In this case, an auxiliary quantity is set to 1/m. It is therefore possible to obtain a recorded image that is 1/m as small as an ordinary recorded image both in the main scanning direction and in the auxiliary scanning direction. Incidentally, an arbitrary variation in the image size involve a change in the read clock of the memory in the example given above. However, the number of rotations of the reflective deflector mirror 103 may be changed.

Note that the embodiment discussed above deals with a case where three light beams are employed. However, the number of light beams may be increased corresponding to the number of the press-fitting members Y105a through C105c. The number of light beams is not necessarily limited to 3. In a printing application, for instance, in the great majority of cases the recording is carried out using 4 kinds of inks of Y, M, C and K (black). Four light beams may be employed. This embodiment has exemplified a color film on which the inks recorded on the image receiving sheet 109 are arranged in the sequence of Y, M and C. The sequence is, however, changeable such as C, M and Y. The colors for recording are not necessarily different but may be of the same type (monochrome). In this case, a section of a picture is divided into a plurality of regions. Printing is performed in such a way that the respective beams are assigned to the individual regions. As a result, printing can be effected at high speed. In this case, the ink sheet is not necessarily bent.

The printing signal generating unit 100 is not limited to the above described construction but may take other configurations adaptive to perform the equivalent functions.

Besides, the embodiment discussed above has presented a plurality of light sources each having a function to shift the condensing spot position in accordance with the deflection angle of the light beam in order to convert the light beams from the light source into desired light beams. Instead, however, a solid state laser intervenes in a route for the light emerging from the semiconductor laser. With this arrangement, the semiconductor laser beams may be converted into high-definition beams in a single mode. A focus is varied by moving, e.g., a condensing lens, thereby changing a size of the light beam.

As discussed above, the image recording system in the second embodiment of the invention yields the following advantages. The image is recorded by use of a plurality of light beams. It is therefore feasible to reduce the time needed for obtaining one recorded image. In addition, the means for rotating the image receiving sheet becomes unnecessary. A single step of arranging the record starting position may suffice. It is also possible to obtain the recorded image exhibiting a high resolution, because the recording is effected by utilizing the light beams. A size of the recorded image can simply be arbitrarily determined.

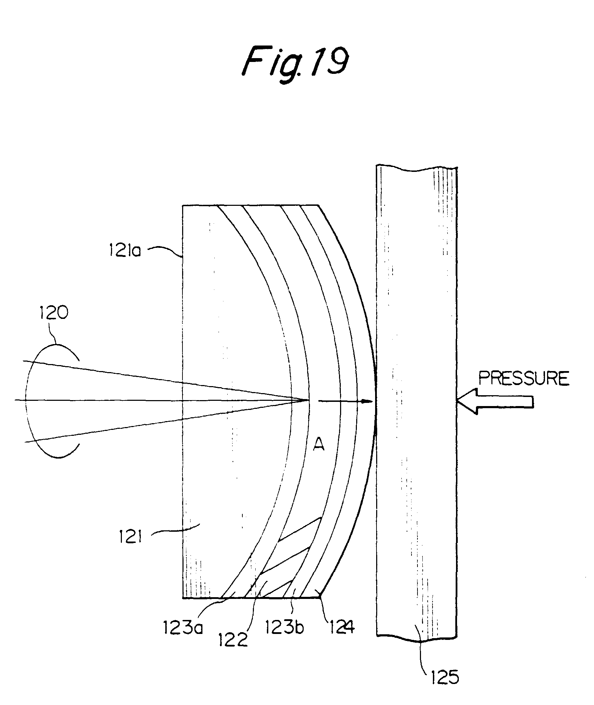

A third embodiment of the invention will next be described with reference to FIG. 19.

FIG. 19 is a block diagram schematically depicting a photothermal converting device in the third embodiment of the invention. In FIG. 19, a glass supporting member admits a transmission of the light beam. Designated at 123a is a transparent electrode, formed on the glass supporting member 121, which also permits the transmission of the laser beam. The electrode 123a is defined as a first electrode 123a connected to an unillustrated voltage source. A thin film resistor 122 is formed on the first electrode 123a. A thermally conductive electrode 123b is formed on the thin film resistor 122. The electrode 123b is defined as a second electrode connected to an unillustrated voltage source. An anti-abrasion layer 124 is formed on the second electrode 123b.

The operation will next be explained. A laser beam 120 having a predetermined beam diameter is generated by an unillustrated laser beam generating means. The laser beam 120 is modulated in terms of space or time or optical intensity. The laser beam 120 falls on a surface 121a of the glass supporting member 121 and penetrates the first electrode 123a as well as the glass supporting member 121. Then, the thin film resistor 122 is irradiated with the laser beam 120. A resistance value of the irradiated portion is reduced due to a photoconductive effect or a temperature rising effect corresponding to the irradiating laser beam 120. At this time, voltages V are applied to the resistor 122 from the first and second electrodes 123a and 123b. Generated in the irradiated portion at this moment is Joule heat proportional to the electric power P expressed by $P = V^2/r$ (where r is the synthetic resistance value of an area including the vicinity of the irradiated portion). The Joule heat is concentrated substantially at the center of the irradiating beam in a form which reflects its configuration. The Joule heat is transmitted to the second electrode 123b having a thermal conductivity larger than that of the first electrode 123a. The heat is further transmitted in an arrowed direction A shown in the Figure. The heat is conducted to the anti abrasion layer. The thus conducted heat is transmitted to a thermal recording medium 125, thereby performing the thermal recording. In this manner, the first electrode, the thin film resistor, the second electrode and the anti-abrasion layer are sequentially laminated in accordance with this embodiment. With this arrangement, the heat transmitted to the electrodes is effectively used for the recording. This obviates a problem of the heat being caused to be radiated to the outside through the electrodes.

As explained before, since the photothermal conversion is practicable, it is possible to obtain the recording dots in the form of irradiation projections. The photothermal conversion is executed repeatedly or intermittently both in the main scanning direction and in the auxiliary scanning direction to form dot configurations corresponding to the image information. A desired hardcopy is thus obtained.

Next, the thin film resistor 122 will be described. In the prior art photothermal converting device shown in FIG. 3, a photothermal convertible material is composed of a carbon black, graphite, phthalocyaniane series color pigments, metal powder and metal oxide powder. This photothermal convertible material is irradiated with the laser beams. The energy for generating the heat depends entirely on the laser beams. For this reason, large output laser beams are required. In the present invention and in the conventional example of FIG. 3 as well, the photothermal converting unit incorporates the thin film resistor interposed between the electrodes, a resistance value of which is decreased corresponding to a temperature or a light quantity. Therefore, the light or the heat caused by the laser beams induces an amplification of the heat.

Firstly, the temperature will be mentioned. Among the resistors, there is a temperature sensitive negative resistor (formed by mix-sintering metal oxides such as Cr, Mn, Fe, Co, Ni, Cu and Al) whose resistance value varies in quick response to variations in temperature. This type of resistor is called a thermistor. In the material thereof, the resistance value exponentially changes. An approximately one-figure change in the resistance value is exhibited when causing the temperature variations of several tens of degrees. More specifically, If the heat of several tens of degrees is generated by the laser beams, the resistance value of the irradiated portion varies corresponding to a configuration of the laser beam. By a voltage V applied between the resistances, there is generated the heat corresponding to the electric power given by $P = V^2/r$ (r is the synthetic resistance value after the irradiation).

Secondly, a photosensitive resistor will be explained. The resistor contains a material a resistance value of which changes in accordance with a light quantity. This is called a photoconductive material (such as CdS, CdSe, PbS and PbSe). A voltage V is impressed on a photoconductive body. When the photoconductive body is irradiated with light having an illuminance L, its photo current I is expressed by $I = \alpha \cdot V^{\beta} \cdot L^{\gamma}$. In this case, $\beta \simeq 1$, and $0.5 < \gamma < 1.0$, where $\alpha$ is the constant. If a resistance value of R exists, there is evolved heat corresponding to the electric power expressed as $P = R \cdot I^2 \fallingdotseq R \cdot \alpha^2 \cdot V^{2\beta} \cdot L^{2\gamma}$. In this formula, $1 < \gamma < 2$. This implies generation of the superlinear (non-linear) electric power or heat with respect to a variation L in intensity of the linear light. It can be understood from this that the electric power largely changes due to a slight variation in the light quantity, and the photothermal conversion can be effected at a higher efficiency.

The materials given above are relatively expensive, and hence a unitary usage thereof is a problem in terms of profitability. To cope with this, the thin film resistor may be formed by mixing the temperature sensitive resistor composed mainly of inexpensive carbon with at least one particle material of the photosensitive resistor. In this case, the carbon itself is used as a material of the resistor, and an arbitrary resistance value is attainable. For these reasons, even when no irradiation of the laser beams takes place, there is generated the heat corresponding to the electric power expressed such as $P = V^2/R$ (R is the inter-electrode synthetic resistance value) by impressing a predetermined voltage V. Therefore, the resistor is usable as a preheat means for the thermal recording medium and the photothermal converting device. The resistor contributes an increase in the efficiency. For the thin film resistor employed herein, an optimum configuration, mixing or material may be selected considering factors such as a long-term stability (resistive to a deterioration by oxidation), heat resistance, ease of manufacture, costs, operating velocity, sensitivity to the laser beam, synthetic resistance value and environmental safety.

Subsequently, the supporting member will be described. The embodiment given above has dealt with only an arrangement that a tabular glass supporting member assumes a convex on the heat emitting side. Other configurations may be adopted. For example, the glass supporting member may assume a lens-like configuration to have a capability to condense the laser beams. The material of the supporting member is not limited to the glass. The material may include those such as transparent plastic which admits a transmission of the laser beam and exhibits a high heat resistant property.

The electrodes will next be explained. The first electrode 123a is a transparent electrode that transmits the laser beam. A Nesa film (a thin film of tin oxide) will be exemplified. The second electrode 123b is a thin film, having a higher heat conductivity than the first electrode, for efficiently transmitting the heat generated in the thin film resistor 122 in an arrowed direction A of the Figure. A metal deposited film will be exemplified.

The following is a description of the anti-abrasion layer. When the thermal recording is executed by the photothermal converting device of this invention, an exothermic unit directly contacts the thermosensible sheet or the ink film (thermally fusible type or temperature rising type) conceived as a thermal recording medium. The exothermic unit undergoes friction to thereby cause an abrasion. The anti-abrasion layer involves the use of a thin film formed on the second electrode. This thin film having a high hardness is thermally conductive and stable as well. For instance, a DLC (Diamond Like Carbon) film will be recommended. This DLC film is amorphous exhibiting both a diamond structure and a graphite structure. The DLC film is ideal as a protective film as it has a high level of hardness, self-lubricity, water repellency (anti-adsorptiveness) and thermal conductivity. Besides, the DLC film is thermally stable and non-polluting.

As discussed above, the third embodiment of the invention provides the following advantages. The thin film resistor, whose resistance value varies in response to the light quantity, is sandwiched in between the pair of electrodes for supplying this resistor with the electric power for generating the heat. The anti-abrasion layer is added thereto. It is therefore possible to obtain the photothermal converting device capable of performing the thermal recording with the relatively low output laser beams utilized only for the exothermic control. Moreover, heat can be prevented from being radiated outside via the electrodes.

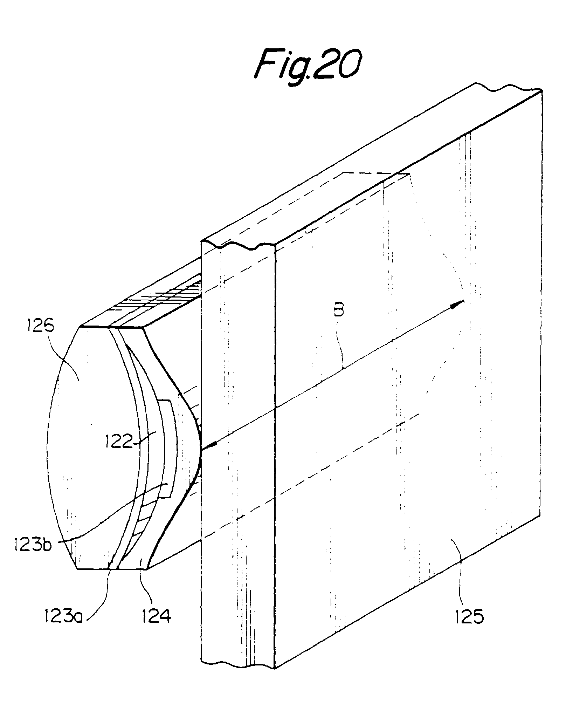

A fourth embodiment of the invention will next be described. FIG. 20 is a perspective view depicting a thermal recording system using the photothermal converting device of the invention. The components corresponding to those of the third embodiment are marked with the like symbols, and the description is omitted.

A characteristic arrangement is that the central part of the exothermic unit assumes a convex adaptive to closely fit to a thermal recording medium. A 1-line recording is attainable by effecting a scan on the central convex part (indicated by an arrow B in the Figure) at a predetermined speed.

The glass supporting member 126 has a convex-lens-like configuration in a section sufficient to condense the laser beams.

The photothermal converting device in the fourth embodiment is usable as a thermal head. The photothermal converting device is applicable to a thermosensible recording method, a sublimation color dye thermal transfer method and a wax type thermal transfer method or other thermosensible recording methods.

According to the embodiments described above, the recording is effected to reflect the irradiation configuration of the laser beams. According to further embodiments, the dot recording configurations can be controlled by use of the metal electrode formed with windows as the first electrode in place of the transparent electrode.

FIG. 21 is a block diagram schematically illustrating a photothermal converting device in a fifth embodiment of the invention. The numeral 131 represents a glass supporting member which transmits the laser beams.

An electrode 133a formed on the glass supporting member 131 includes windows which admit the laser beams. The electrode 133a is conceived as a first electrode connected to an unillustrated voltage source. A thin film resistor 132 is formed on the first electrode 133a. A well conductive electrode 133b is formed on the thin film resistor 132. The electrode 133b is defined as a second electrode connected to an unillustrated voltage source.

The operation will next be explained. According to the fifth embodiment, the Joule heat is similarly generated by the laser beams 130 emerging via a surface 131a of the glass supporting member 131. The Joule heat concentrates in such a form as to reflect the configurations at a substantially central part of the irradiating beams. The heat is transmitted to the second electrode having a larger thermal conductivity than the first electrode 133a. The heat is further transmitted to an anti-abrasion layer 134. To be specific, the heat is transferred in an arrowed direction A in the Figure. The thus transferred heat is then conducted to a thermal recording medium 135, whereby the thermal recording is carried out.

Since the above-mentioned photothermal conversion is effected, it is possible to obtain the recording dots in the form of irradiating projections through the windows of the first electrode 133a. The photothermal conversion is performed continuously or intermittently both in the main scanning direction and in the auxiliary scanning direction. The dots corresponding to the image information are formed. thus obtaining a desired hardcopy image.

The first electrode in the fifth embodiment will be explained. The first electrode 133a is formed with the windows through which the laser beams pass. Metal mesh-like and slit-like geometries may be exemplified. The second electrode 133b is a thin film having a nature or structure exhibiting the higher thermal conductivity than the first electrode enough to efficiently transmit the heat generated in the thin film resistor 132 in the arrowed direction A. A metal deposited film will be exemplified.

A description of the second electrode in the fifth embodiment will hereinafter be given. The second electrode 133b is the thin film having the nature or the structure exhibiting a higher thermal conductivity than the first electrode sufficient to efficiently transmit the heat generated in the thin film resistor 132 in the arrowed direction A.

As explained earlier, in addition to the advantages of the first to fourth embodiments, the fifth embodiment presents an advantage of being able to control the dot configurations regardless of the configurations of the irradiating laser beams.

According to the fifth embodiment, the first electrode is bored with the windows which admit the laser beams. The thermal recording configurations are arbitrarily controllable by arbitrarily changing the shapes of the windows. There is produced an advantage in which the thermal recording can be performed in non-constrained configurations while the shapes of the laser beams remain as they are.

A sixth embodiment of the invention will next be described.

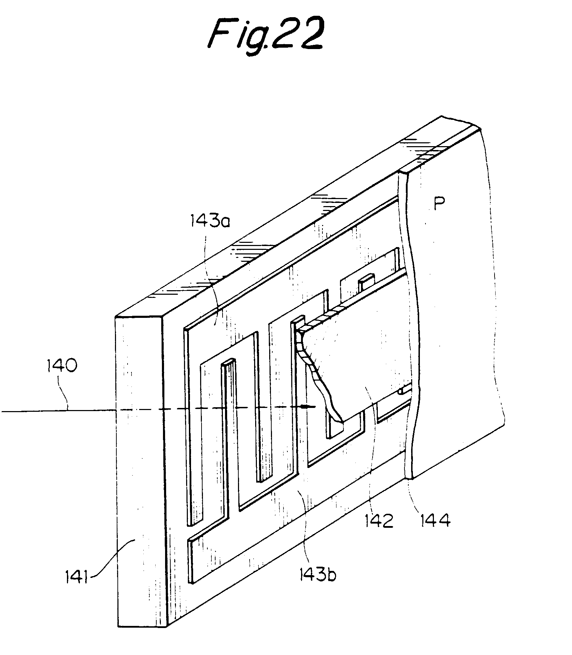

FIG. 22 is a block diagram schematically depicting a photothermal converting device in the eighth embodiment of the invention. Referring to FIG. 22, the numeral 141 denotes a glass supporting member that transmits the laser beams. Electrodes 143a and 143b, which are connected to an unillustrated voltage source, are disposed on the glass supporting member 141 in such a way that electrode pieces having different polarities are alternately arranged. A resistor 142 is formed on the electrodes 143a and 143b. An anti-abrasion layer 144 is shaped on the resistor 142.

A description of the operation will be given as follows.

A laser beam 140 having a predetermined beam diameter is generated by an unillustrated laser beam generating means. The laser beam 140 is modulated in terms of space or time or optical intensity. The laser beam 140 penetrates the glass supporting member 141 and travels between the electrodes 143a and 143b. The resistor 142 is then irradiated with the laser beam 140. A resistance value of the irradiated portion is decreased due to a photoelectric effect or a temperature rising effect corresponding to the irradiating laser beam. At this time, a voltage V is impressed on the resistor 142 from the electrodes 143a and 143b. Generated is the Joule heat proportional to the electric power given by $P = V^2/r$, where r is the synthetic resistance value of an area including the vicinity of the irradiated portion. The Joule heat concentrates at a substantially central part of the irradiating beams. The heat is conducted via the resistor 142 to the anti-abrasion layer 144. The thus conductive heat is transferred to an unillustrated thermal recording medium (a surface P shown in the Figure), whereby the thermal recording is carried out.

As discussed above, the photothermal conversion is effected, and it is therefore feasible to obtain the recording dots in the form of projections of the irradiated configurations. The photothermal conversion is executed continuously or intermittently both in the main scanning direction and in the auxiliary scanning direction. The dots corresponding to the image information are formed, thereby providing a desired hardcopy image.

One of the materials sensitive to the heat generating effect by the laser beams is a temperature sensitive negative (positive) characteristic resistor (typically resistors having brand names such as THERMISTOR and POSISTOR). One of the materials sensitive to the photoconductive effect is a photosensitive resistor. These materials are outlined in general books regarding the electronics materials. A resistance value of each of such materials approximates to the characteristic of the semiconductor device. The resistance value varies with a square of temperature or light quantity. That is, the resistance value sharply changes with a slight increase in the temperature or in the light quantity. Superlinear (non-linear) electric power or heat with respect to variations in intensity of the linear light is generated. Prepared is an ordinary resistor composed of carbon black, a material which converts the laser beams into heat with high efficiency, an ordinary non-sensitive material (such as $SiO_2$, NiCr and the like used for the thermal head) and a sensitive material. The resistor 142 is formed by locally doping at least one of the temperature sensitive resistor and the photosensitive resistor to the above-mentioned ordinary resistor; or alternatively one of these resistors is laminated onto the ordinary resistor. In this case, the carbon itself is used for general purposes as a material for the resistor, and an arbitrary resistance value is therefore attainable. For this reason, even when no irradiation of the laser beams takes place, there is generated heat corresponding to the electric power expressed as $P = V^2/R$ (R is the inter-electrode synthetic resistance value) by applying a predetermined voltage V. The resistor 142 is usable as a preheat means for the thermal recording medium and the photothermal converting device. The resistor 142 contributes to an increase in efficiency of the photothermal conversion.

For the resistor employed herein, an optimum configuration, mixing or material may be selected considering factors such as a long-term stability (resistive to a deterioration by oxidation), life-span of heat resistance, ease of manufacture, costs, operating velocity, sensitivity to the laser beam, synthetic resistance value and environmental safety.

The following is a description of gradation characteristics. A laser beam energy level provided to a predetermined area within a predetermined time is continuously variable. Hence, the gradation characteristics are obtained by changing the energy quantity of the incident laser beams and generating heat corresponding to the energy quantity.

An explanation pertaining to a resolution will be given. The resolution of the photothermal converting device of the invention is determined by a diameter of the laser beam and a spacing between the alternately-disposed electrodes having polarities different from each other.

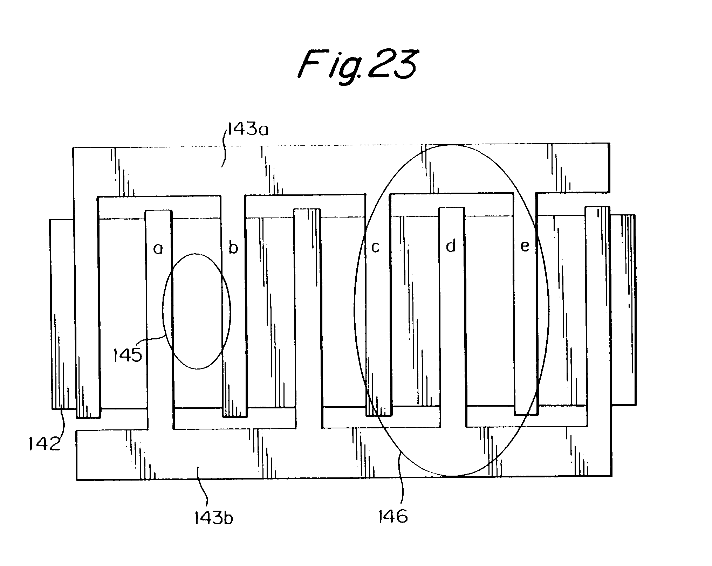

FIG. 23 is a view illustrating a situation where the photothermal converting device of the invention is irradiated with the laser beams having two mean diameters, this situation being observed from the glass supporting member. Referring to FIG. 23, the numeral 145 and 146 represent beam diameters. When an irradiation of the laser beam having the beam diameter 145 takes place as shown in the Figure, the heat is generated in a portion sandwiched in between electrode pieces _a_ and _b_ of the electrodes 143a and 143b. Recording dots are thus formed. In the case of the beam diameter 146, the heat is generated in portions interposed between electrode pieces _c_, _d_ and _e_ of the electrodes 143a and 143b. The recording dots are thus formed. Hence, the recording dot is shaped at the spot larger than at least the spacing between the electrodes. A size of the recording dot can be varied by controlling the spot size.

In accordance with this embodiment, the electrodes 143a and 143b are formed in a zig-zag shape. With this arrangement, a contact area between the electrodes and the resistor as compared with the conventional examples. The reduction in turn restrains the external radiation of heat.

The supporting member will hereinafter be explained. The embodiment given above deals with a case where a tabular glass is employed as a supporting member. Other configurations may, however, be adopted.

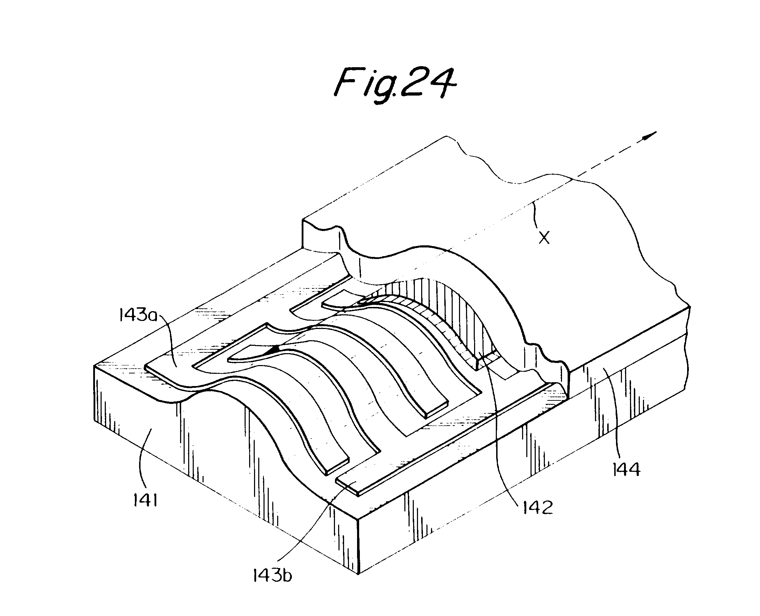

FIG. 24 is a perspective view schematically illustrating a seventh embodiment of the invention. The components corresponding to those described in the sixth embodiment are marked with the like symbols, and description thereof is omitted. A central part, indicated by an arrow X, of the supporting member assumes a convex so that the exothermic unit is closely fitted to the thermal recording medium. A predetermined pressure acts on the thermal recording medium by use of an unillustrated platen. The central convex part (indicated by the arrow X in the Figure) is scanned at a high speed, whereby a 1-line recording can be effected. The supporting member may assume a shape having a capability of condensing the laser beams. The material of the supporting member is not limited to the glass but may include materials such as transparent plastic permitting a transmission of the laser beam and exhibiting a high heat resistant property.

The photothermal converting device described in the embodiment of FIG. 24 is usable as a thermal head and applicable to the thermosensible recording method, the sublimation color dye thermal transfer method, the wax type thermal transfer method and other thermal recording methods.

The anti-abrasion layer will be described as follows. When the thermal recording is executed by the photothermal converting device of this invention, an exothermic unit directly contacts the thermosensible sheet or the ink sheet (thermally fusible type or temperature rising type) conceived as a thermal recording medium. The exothermic unit undergoes a sliding process. For this reason, the anti-abrasion layer involves the use of a thin film formed on the resistor 142. This thin film having a high degree of hardness is thermally conductive and stable as well. For instance, a DLC (Diamond Like Carbon) film will be recommended for this thin film. This DLC film is amorphous exhibiting both a diamond structure and a graphite structure. The DLC film is ideal as a protective film because of having high hardness, self-lubricity, water repellency (anti-adsorptiveness) and thermal conductivity. Besides, the DLC film is thermally stable and non-polluting.

As discussed above, the sixth and seventh embodiments of this invention present the following advantages. The electrodes supply the voltage to the resistor whose resistance value varies in response to the heat generated by the laser beams or the laser beam quantity. The electrodes having different polarities are rectilinearly alternately disposed. Besides, the anti-abrasion layer is additionally provided. This arrangement minimizes the amount of heat which escapes outside. It is possible to obtain photothermal converting device capable of effecting the thermal recording with relatively low output laser beams utilized only for the exothermic control.

An eight embodiment of the present invention will be described with reference to the drawings.

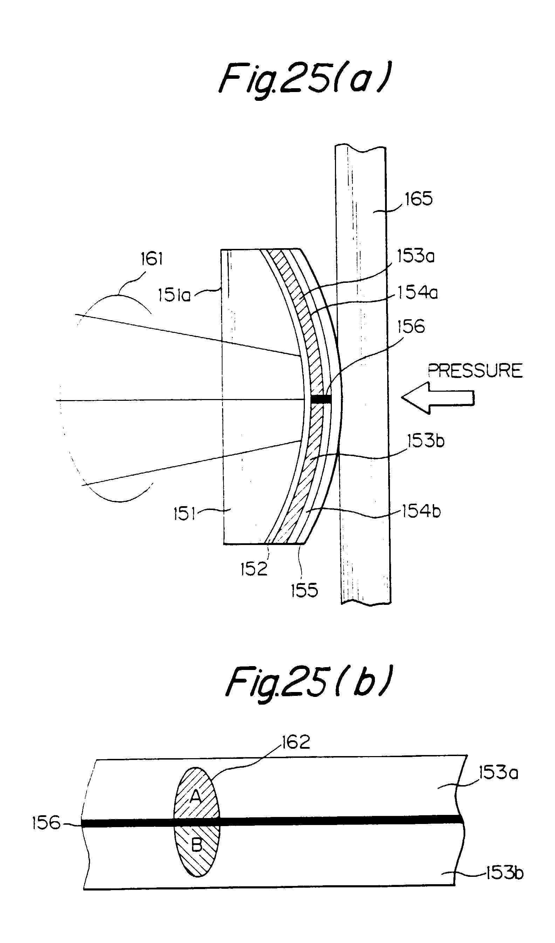

FIG. 25(a) is a block diagram schematically illustrating a photothermal converting device in the eighth embodiment of the invention. In FIG. 25(a), the numeral 151 represents a glass supporting member that transmits the laser beams. A transparent electrode 152 through which the laser beam passes is formed on the glass supporting member 151. The transparent electrode 152 is defined as a common electrode connected to an unillustrated voltage source. Thin film resistors 153a and 153b spaced away from an insulating material 156 are formed on the common electrode 152. Thermally conductive electrodes 154a and 154b are respectively formed on the thin film resistors. The electrodes 154a and 154b are conceived as signal electrodes connected to an unillustrated voltage source. An anti-abrasion layer 155 is formed on the electrodes 154a and 154b.

The operation will next be described. A laser beam 161 having a predetermined beam diameter emerges from an unillustrated laser beam generating means. The laser beam 161 falls on a surface 151a of the glass supporting member 151. The laser beam 161 then penetrates the common electrode 152 as well as the glass supporting member 151. The thin film resistors 153a and 153b are irradiated with the laser beam 161. FIG. 25(b) is a diagram showing a state where the laser beam 161 is emitted. In FIG. 25(b) the numeral 162 designates a beam diameter of the laser beam 161. The beam diameter 162 is, as depicted in the Figure, divided into two regions A and B by the insulating material 156. Resistance values of irradiated portions (A) and (B) are decreased due to a photoconductive effect or a temperature rising effect corresponding to the laser beam 161 emitted. Voltages $V_A$ and $V_B$ modulated in accordance with the image are impressed at this moment on the thin film resistors 153a and 153b from the signal electrodes 154a and 154b. Generated respectively is the Joule heat proportional to the electric powers given by $P_A = (V_A)^2/r$ and $P_B = (V_B)^2/r$, where $\underline{r}$ is the synthetic resistance value of an area including the vicinities of the irradiated portions. Each Joule heat concentrates at a substantially central part of the irradiating beam in such a form as to reflect the configuration. The Joule heat is transmitted to the signal electrodes 154a and 154b each having a thermal conductivity greater than the common electrode 152. The Joule heat is further transmitted to the anti-abrasion layer. The thus transmitted Joule heat is then conducted to the thermal recording medium 165. The thermal recording is thereby effected. Namely, the two exothermic regions having different exothermic quantities are available for one spot of irradiation, thereby obtaining two recording dots at the same moment. As explained above, this embodiment has such a structure that the common electrode, the two thin film resistors sectioned by the insulating material, the two signal electrodes and the anti-abrasion layer are sequentially laminated. The electrodes are formed to assume such configurations that the heat transmitted to the electrodes contributes the recording. This arrangement eliminates a problem of external radiation via the electrodes.

The photothermal conversion is effected in the manner described above, and hence the recording dots can be obtained in the form of projections of irradiation. The photothermal conversion is carried out continuously or intermittently both in the main scanning direction and in the auxiliary scanning direction. The dots corresponding to the image information are formed, thus obtaining a desired hardcopy image.

As discussed above, the eighth embodiment yields the following advantages. Sandwiched in between the pair of electrodes for supplying the thin film resistor with electric power for generating the heat is the thin film resistor a resistance value of which varies in response to the quantity of heat generated by the laser beams of the laser beam quantity. The anti-abrasion layer is added thereto. These components are disposed in a plurality of lines in a direction orthogonal to the main scanning direction. Hence, the thermal recording which covers the plurality of lines is attainable with the single main scanning process. Besides, the heat can be prevented from being radiated outside via the electrodes.

A description of the electrodes in this embodiment will be given. A common electrode 152 is sufficiently transparent to transmit the laser beams. The transparent electrode 152 composed of, e.g., a Nesa film (a thin film of tin oxide). Thin films 154a and 154b each having a higher thermal conductivity that the common electrode serve to efficiently transmit the heat generated in the thin film resistors 153a and 153b to an anti-abrasion layer 155. A metal deposited film will be exemplified.

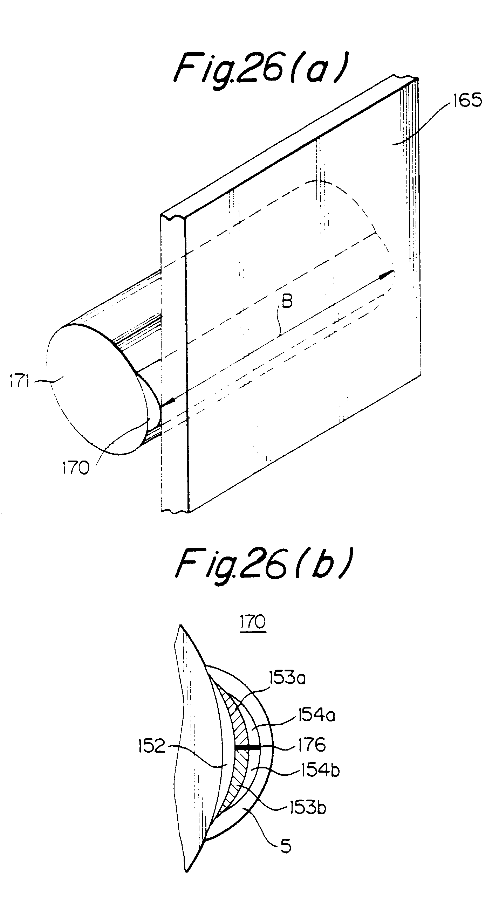

The following is a ninth embodiment of the invention. FIG. 26(a) is a perspective view depicting a thermal recording device utilizing the photothermal converting device of this invention. FIG. 26(b) is a sectional view of a photothermal converting unit 170 thereof. The components corresponding to those in the eighth embodiment are marked with like numerals, and description thereof is omitted.

A characteristic arrangement of the ninth embodiment is that a central part of the exothermic unit assumes a convex suited to closely fit to the thermal recording medium. When the central convex part (indicated by an arrow B in the Figure) undergoes one scanning process at a predetermined velocity, 2-line recording can be performed.

A glass supporting member 171 takes a shape like a convex lens in section to exhibit a capability of condensing the laser beams.

There will be explained a method of modulating a voltage corresponding to the image. The modulation method of changing an amplitude of the voltage applied may involve an amplitude modulation, or a pulse amplitude modulation, or a pulse width modulation to vary an application time width while keeping the applied voltage constant, or a pulse number modulation to vary a pulse application density in time. The thermal recording corresponding to the image can be done by any methods described above. Namely, a desired image is thermally recorded by changing an amount of electric power given within a predetermined period of time.

In insulating material 176 will next be explained. The insulating material 176 is intended to electrically separate the thin film resistors 153a and 153b from the signal electrodes 154a and 154b on the common electrode 152. If the insulating material 176 is thermally well conductive, it is possible to prevent inter-line white streaks from appearing in the recording. This function is equivalently attainable by a physical arrangement of the respective materials.

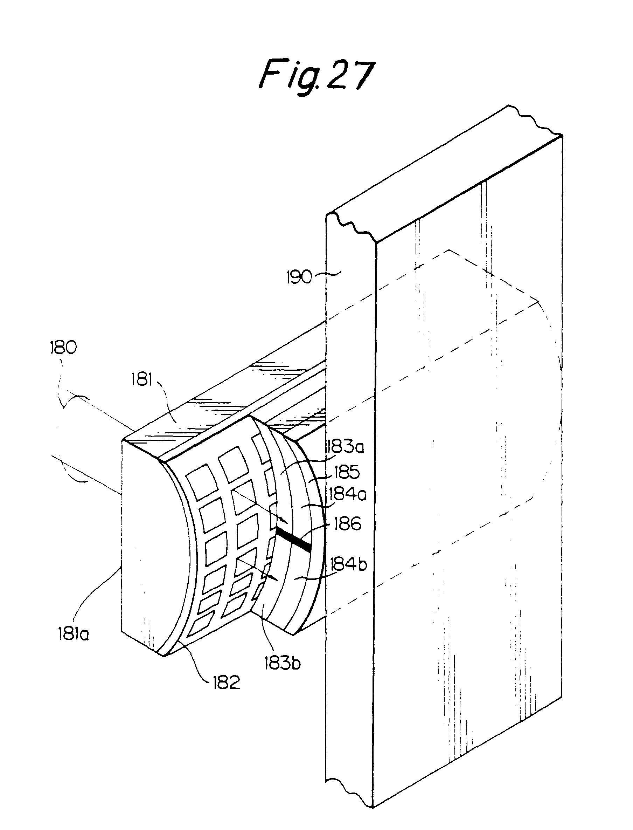

FIG. 27 is a block diagram schematically showing a photothermal converting device in a tenth embodiment of the invention. Referring to FIG. 27, the numeral 181 designates a glass supporting member that transmits the laser beams. An electrode 182 formed on the glass supporting member 181 is provided with windows which admit the laser beams. The common electrode 182 is connected to an unillustrated voltage source. Thin film resistors 183a and 183b are formed on the common electrode 182. High conductive electrodes 184a and 184b are formed on the thin film resistors 183a and 183b. The signal electrodes 184a and 184b are connected to an unillustrated voltage source.

A description of the operation will next be given. In the tenth embodiment, the Joule heat is generated on the thin film resistors 183a and 183b by a laser beam 180 coming from a surface 181a of the glass supporting member 181. The Joule heat concentrates at a substantially central part of the irradiating laser beam in such a form as to reflect the configuration. The heat is transmitted to the signal electrodes 184a and 184b each having a greater thermal conductivity than the common electrode 182. The heat is further transmitted to the anti-abrasion layer. The thus transmitted heat is then conducted to a thermal recording medium 190, whereby the thermal recording is effected simultaneously in the two regions.

The above-mentioned photothermal conversion takes place, as a result of which two recording dots are simultaneously obtained in the form of projections of irradiation through the windows of the common electrode 182. The photothermal conversion is effected continuously or intermittently both in the main scanning direction and in the auxiliary scanning direction. The dots corresponding to the image information are thus formed, thereby obtaining a desired hardcopy image.

The common electrode in the tenth embodiment will be explained. The common electrode 182 is formed with the windows which admit the laser beams. Metal mesh-like slit-like geometries may be exemplified.

The signal electrodes in the tenth embodiment will be described. Each of the signal electrodes 184a and 184b is conceived as a thin film. The thin film has a nature or structure exhibiting a higher thermal conductivity than the common electrode enough to transmit the heat evolved in the thin film resistors 183a and 183b to the anti-abrasion layer 185. A metal deposited film may be exemplified.

As discussed above, in accordance with the tenth embodiment, the common electrode includes windows through which the laser beams travel. Hence, advantages are produced, wherein the windows serve to control the thermal recording configurations, and the thermal recording takes place in the form which is not constrained by the laser beam configurations.

Note that each of the eighth and ninth embodiments has dealt with a case where the two thin film resistors and the two signal electrodes are provided, but a greater number of these components may also be provided. In this case, there are simultaneously obtained an equal number of recording dots to the number of the thin films and of the electrodes.

## Claims

1. An image recording system for recording a desired image by use of laser beams, comprising:

   a printing signal generating means (61) for outputting a recording image signal;
   a laser beam generating means (1) for generating a laser beam;
   a laser beam driving means (62) for modulating the laser beam output from said laser beam generating means (1) in accordance with an output signal of said signal generating means (61);
   a photothermal converting means (74) for converting the modulated laser beam into heat;
   a deflective scanning means (2,63) for deflect-scanning a predetermined position of said photothermal converting means (74) with the laser beam;
   a preheat means (70a, 70b, 71, 78) formed by a resistor (78) in said photothermal converting means for raising the temperature of said photothermal converting means (74) by applying an electric power to said photothermal converting means (74); and characterized by
   a means (81) for controlling a preheat temperature of said photothermal converting means, whereby color thermal transfer recording can be performed under the same recording conditions for each respective color, and recording on a thermosensible sheet (65) can be performed.

2. The system as set forth in claim 1, wherein said photothermal converting means (74) is composed of a resistor (78), and a preheat function is given by adding electrodes (70a, 70b) and a power supply (71) for supplying said resistor (78) with electric power.

3. The system as set forth in claim 1 wherein said photothermal converting means (74) is composed of a resistor (122), including at least one of a temperature sensitive negative resistance material a resistance value of which largely varies in response to the heat generated by the laser beam (120) and a photosensitive photoconductive material a current value or a resistance value of which vaaries largely in response to the laser beam (120).

4. The system as set forth in claim 1 further comprising a light beam reshaping means, wherein said laser beam source generates multi-mode laser beams, and wherein said light beam reshaping means converts the multi-mode laser beam into a unitary-mode laser beam.

5. The system as set forth in claim 1 further comprising a means for press-fitting a color film applied with inks onto said thermosensible sheet, said press-fitting means having a convex shape.

6. The system as set forth it claim 1, wherein said photothermal converting means (74) comprises:

a supporting member (121) transmitting the laser beam (120);
a first electrode (123a) formed on said supporting member (121), and composed of a material which transmits the laser beam;
a thin film resistor (122) formed on said first electrode (123a),
a thermally well conductive second electrode (123b) formed on said thin film (122); and
a thermally well conductive anti-abrasion layer (124) formed on said second electrode (123b), whereby the laser beam (120) is modulated in terms of space, time or optical intensity in accordance with an image signal, the modulated laser beam (120) is condensed to a predetermined beam diameter and employed for scanning at a predetermined speed, said thin film (122) is irradiated with the condensed laser beam, and
heat is generated in the irradiated portion on said thin film (122),
and thermal recording can be effected by heat.

7. The system as set forth in claim 1, wherein said photothermal converting means (74) comprises:

a supporting member (131) transmitting the laser beam (130);
a first electrode (133a) formed on said supporting member (131) and including windows through which the laser beam (130) passes;
the resistor formed on said first electrode (133a) as a thin film resistor (132)
a thermally well conductive second electrode (133b) formed on said thin film resistor (132); and
a thermally well conductive anti-abrasion layer (134) formed on said second electrode (133b), whereby the laser beam (130) is modulated in terms of space, time or optical intensity in accordance with an image signal, the modulated laser beam (130) is condensed to a predetermined beam diameter and employed for scanning at a predetermined speed, the condensed laser beam (130) passes through each of said windows of said first electrode (133a), said thin film (132) is irradiated with the condensed laser beam (130) passing therethrough, and heat is generated in the irradiated portion on said thin film (132),
and thermal recording can be effected by heat.

8. The system as set forth in claim 1, wherein said photothermal converting means (74) comprises:

a supporting member (141) trnasmitting the laser beam (140);
a train of electrodes (143a, 143b) which are disposed in a main scanning direction on said supporting member (141) so that the polarities of the electrodes (143a, 143b) are alternatively different from each other ; the resistor being formed on said electrodes; and
a thermally conductive anti-abrasion layer (144) formed on said resistor (142), whereby the laser beam (140) is modulaled in terms of space, time or optical intensity in accordance with an image signal, the modulated laser beam (140) is condensed to a predetermined beam diameter and employed for scanning at a predetermined speed, said resistor (142) is irradiated with the condensed laser beam (140), and heat is generated in the irradiated portion, and thermal recording can be effected by heat.

9. The system as set forth in claim 1, wherein said photothermal converting means (74) comprises;

a supporting member (151) transmitting the laser beam (161);

a common electrode (152) formed on said supporting member (151) and composed of a material which transmits the laser beam (161), the resistor being composed of a plurality of thin film resistors (153a, 153b) so formed on said common electrode (152) as to be sectioned by an insulating material (156);

thermally well conductive signal electrode (154a, 154b) formed respectively on said plurality of thin film resistors (153a, 153b); and

a thermally well conductive anti-abrasion layer (155) formed on said signal electrodes (154a, 154b) whereby the laser beam (161) is condensed to a predetermined beam diameter and employed for scanning at a predetermined speed, each of said plurality of thin films (153a, 153b) are irradiated with the condensed laser beam (161), and

heat is generated,

and thermal recording on said plurality of regions can simultaneously be performed by heat.

10. The system as set forth in claim 1, wherein said photothermal converting means (74) comprises;

a supporting member (181) transmitting the laser beam (180);

a common electrode (182) formed on said supporting member (181) and and including windows through which the laser beam (180) passes;

the resistor being composed of a plurality of thin film resistor (183a, 183b) so formed on said common electrode (182) to be sectioned by an insulating material (186);

thermally well conductive signal electrodes (184a, 184b) formed on said plurality of thin film resistors (183a, 183b); and

a thermally well conductive anti-abrasion layer (185) formed on said signal electrodes (184a, 184b), whereby the laser beam (180) is condensed to a predetermined beam diameter and employed for scanning at a predetermined speed, the condensed laser beam (180) passes through said windows of said common electrode (182), each of the irradiated portions of said plurality of thin films (183a, 183b) is irradiated with the laser beam (180), and

heat is generated,

and thermal recording on a plurality of regions can simultaneously be performed by heat.

11. The system as set forth in claim 1, wherein said laser beam generating means comprises a plurality of light sources (102a, 102b, 102c) for emitting the light in accordance with output signals from said printing signal generating means (100), and wherein said laser beam driving means comprises a means for effecting main scanning with a plurality of light beams emitted from said plurality of light sources (102a, 102b, 102c) while reflectively deflecting the plurality of light beams by using a reflection deflective mirror (103),

said system further comprising:

a means (105a-c, 106a-c) for press-fitting a color film (108) applied with inks onto said thermosensible sheet (109) by bending said color film (108) in accordance with the number of the plurality of light beams; and

a means for effecting auxiliary scanning by carrying said color film (108) and said thermosensible sheet (109).

12. The system as set forth in claim 11, wherein said means (105a-c) for press-fitting said color film (108) onto said thermosensible sheet (109) comprises said photothermal converting means having a member for high efficiency conversion of the light beams into a thermal energy.

13. The system as set forth in claim 11, wherein when the plurality of light beams are reflectively deflected by said reflection deflective mirror (103), each of the plurality of light beams shares is assigned to recording either the same or a different color.

14. The system as set forth in claim 11, wherein said printing signal generating means (100) comprises a video memory (110) for accumulating image signals input from the outside, a color converter circuit (111) for color-converting said image signals input, a plurality of pulse width modulators (112a, 112b, 112c) for determining pulse widths of the light beams coming from said plurality of light sources (102a, 102b, 102c) by comparing color conversion outputs from said color converter circuit (111) with gradation data and a plurality of delay circuit (114a, 114b, 114c) for delaying respective output signals from said plurality of pulse width modulators (112a, 112b, 112c).

15. The system as set forth in claim 14, wherein said printing signal generating means (100) comprises at least one output memory (116a, 116b) provided for storing each delay output given forth from said plurality of delay circuits (114a, 114b, 114c), and wherein read/write operations of the delay outputs with respect to said delay output memories (116a, 116b) are changed over between said delay memories (116a, 116b).

16. The system as set forth in claim 14, wherein said printing signal generating means (100) comprises at least one output memory (116a, 116b), wherein read clocks in the read operations of the output memory (116a, 116b) are variable so that the size of an image to be recorded can be arbitrarily changed.

## Patentansprüche

1. Bildaufzeichnungssystem zum Aufzeichnen eines gewünschten Bildes durch Verwendung von Laserstrahlen, welches aufweist:

   eine Drucksignal-Erzeugungsvorrichtung (61) zum Ausgeben eines aufgezeichneten Bildsignals;
   eine Laserstrahl-Erzeugungsvorrichtung (1) zum Erzeugen eines Laserstrahls;
   eine Laserstrahl-Treibervorrichtung (62) zum Modulieren des von der Laserstrahl-Erzeugungsvorrichtung (1) ausgegebenen Laserstrahls entsprechend einem Ausgangssignal der Signal-Erzeugungsvorrichtung (61);
   eine fotothermische Wandlereinrichtung (74) zum Umwandeln des modulierten Laserstrahls in Wärme;
   eine Ablenk-Abtastvorrichtung (2,63) zum Ablenkabtasten einer vorbestimmten Position der fotothermischen Wandlereinrichtung (74) mit dem Laserstrahl;
   eine durch einen Widerstand (78) gebildete Vorheizvorrichtung (70a,70b,71,78) zum Anheben der Temperatur der fotothermischen Wandlereinrichtung (74) durch Zuführen einer elektrischen Leistung zu der fotothermischen Wandlereinrichtung (74);

   **gekennzeichnet durch**
   eine Vorrichtung (81) zum Steuern einer Vorheiztemperatur der fotothermischen Wandlereinrichtung, wodurch eine thermische Farbübertragungs-Aufzeichnung unter denselben Aufzeichnungsbedingungen für jede jeweilige Farbe durchgeführt werden kann, und eine Aufzeichnung auf ein wärmeempfindliches Blatt (65) durchgeführt werden kann.

2. System nach Anspruch 1, worin die fotothermische Wandlereinrichtung (74) aus einem Widerstand (78) zusammengesetzt ist, und eine Vorheizfunktion gegeben ist durch Hinzufügen von Elektroden (70a,70b) und einer Leistungszuführung (71) zum Beliefern des Widerstandes (78) mit elektrischer Leistung.

3. System nach Anspruch 1, worin die fotothermische Wandlereinrichtung (74) zusammengesetzt ist aus einem Widerstand (122), enthaltend wenigstens eines von einem negativ temperaturempfindlichen Widerstandsmaterial, dessen Widerstandswert in Abhängigkeit von der von dem Laserstrahl (120) erzeugten Wärme stark variiert, und ein fotoempfindliches fotoleitends Material, dessen Stromwert oder Widerstandswert in Abhängigkeit vom Laserstrahl (120) stark variiert.

4. System nach Anspruch 1, weiterhin aufweisend eine Laserstrahl-Wiederformvorrichtung, worin die Laserstrahlquelle Multimode-Laserstrahlen erzeugt, und worin die Laserstrahl-Wiederformvorrichtung den Multimode-Laserstrahl in einen Unitärmode-Laserstrahl umwandelt.

5. System nach Anspruch 1, weiterhin aufweisend eine Vorrichtung zur Preßpassung eines mit Farben versehenen Farbfilms auf das wärmeempfindliche Blatt, wobei die Preßpassungs-Vorrichtung eine konvexe Gestalt hat.

6. System nach Anspruch 1, worin die fotothermische Wandlereinrichtung (74) aufweist:

   ein den Laserstrahl (120) übertragendes Stützglied (121);
   eine auf dem Stützglied (121) gebildete erste Elektrode (123a), die aus einem Material zusammengesetzt ist, welches den Laserstrahl überträgt;
   einen auf der ersten Elektrode (123a) gebildeten Dünnfilm-Widerstand (122);
   eine auf dem dünnen Film (122) gebildete, thermisch gut leitende zweite Elektrode (123b); und
   eine auf der zweiten Elektrode (123b) gebildete, thermisch gut leitende Antiabriebschicht (124), wodurch der Laserstrahl (120) hinsichtlich des Raums, der Zeit oder der optischen Intensität entsprechend einem Bildsignal moduliert wird,
   der modulierte Laserstrahl (120) auf einen vorbestimmten Strahldurchmesser verdichtet und zum Abtasten mit einer vorbestimmten Geschwindigkeit verwendet wird, wobei der dünne Film (122) mit dem verdichteten Laserstrahl bestrahlt und Wärme in dem bestrahlten Bereich auf dem dünnen Film (122) erzeugt wird und eine thermische Aufzeichnung durch Wärme bewirkt werden kann.

7. System nach Anspruch 1, worin die fotothermische Wandlereinrichtung (74) aufweist:

   ein den Laserstrahl (130) übertragendes Stützglied (131);
   eine erste Elektrode (133a), die auf dem Stützglied (131) gebildet ist und Fenster enthält, durch welche der Laserstrahl (130) hindurchgeht;

wobei der Widerstand als ein Dünnfilm-Widerstand (132) auf der ersten Elektrode (133a) gebildet ist;

eine auf dem Dünnfilm-Widerstand (132) gebildete thermisch gut leitende zweite Elektrode (133b); und

eine thermisch gut leitende Antiabriebschicht (134), die auf der zweiten Elektrode (133b) gebildet ist, wodurch der Laserstrahl (130) hinsichtlich des Raums, der Zeit oder der optischen Intensität entsprechend einem Bildsignal moduliert wird, der modulierte Laserstrahl (130) auf einen vorbestimmten Strahldurchmesser verdichtet und zum Abtasten mit einer vorbestimmten Geschwindigkeit verwendet wird, der verdichtete Laserstrahl (130) durch jedes der Fenster der ersten Elektrode (133a) hindurchgeht, der Dünnfilm (132) mit dem hierdurchgehenden verdichteten Laserstrahl (130) bestrahlt wird, und Wärme in dem bestrahlten Bereich auf dem Dünnfilm (132) erzeugt wird, und wobei eine thermische Aufzeichnung durch Wärme bewirkt werden kann.

8. System nach Anspruch 1, worin die fotothermische Wandlereinrichtung (74) aufweist:

ein den Laserstrahl (140) übertragendes Stützglied (141);

ein Zug von Elektroden (143a,143b), welche in einer Hauptabtastrichtung so auf dem Stützglied (141) angeordnet sind, daß die Polaritäten der Elektroden (143a,143b) einander abwechselnd unterschiedlich sind, wobei der Widerstand auf den Elektroden gebildet ist; und

eine auf dem Widerstand (142) gebildete thermisch leitende Antiabriebschicht (144), wodurch der Laserstrahl (140) hinsichtlich des Raumes, der Zeit oder der optischen Intensität entsprechend einem Bildsignal moduliert wird, der modulierte Laserstrahl (140) auf einen vorbestimmten Strahldurchmesser verdichtet und zum Abtasten mit einer vorbestimmten Geschwindigkeit verwendet wird, der Widerstand (142) mit dem verdichteten Laserstrahl (140) bestrahlt wird und Wärme in dem bestrahlten Bereich erzeugt wird, und wobei eine thermische Aufzeichnung durch Wärme bewirkt werden kann.

9. System nach Anspruch 1, worin die fotothermische Wandlereinrichtung (74) aufweist:

ein den Laserstrahl (161) übertragendes Stützglied (151);

eine auf dem Stützglied (151) gebildete und aus einem Material, welches den Laserstrahl (161) überträgt, bestehende gemeinsame Elektrode (152);

wobei der Widerstand aus mehreren Dünnfilm-Widerständen (153a,153b) zusammengesetzt ist, die so auf der gemeinsamen Elektrode (152) gebildet sind, daß sie durch ein isolierendes Material (156) in Abschnitte unterteilt sind; thermisch gut leitende Signalelektroden (154a, 154b), die jeweils auf den mehreren Dünnfilm-Widerständen (153a,153b) gebildet sind; und eine thermisch gut leitende Antiabriebschicht (155), die auf den Signalelektroden (154a, 154b) gebildet ist, wodurch der Laserstrahl (161) auf einen vorbestimmten Strahldurchmesser verdichtet und für eine Abtastung mit einer vorbestimmten Geschwindigkeit verwendet wird, jeder der mehreren Dünnfilme (153a, 153b) mit dem verdichteten Laserstrahl (161) bestrahlt wird, und Wärme erzeugt wird, und eine thermische Aufzeichnung in den mehreren Bereichen gleichzeitig durch Wärme durchgeführt werden kann.

10. System nach Anspruch 1, worin die fotothermische Wandlereinrichtung (74) aufweist:

ein den Laserstrahl (180) übertragendes Stützglied (181);

eine auf dem Stützglied (181) gebildete und Fenster, durch welche der Laserstrahl (180) hindurchgeht, enthaltende gemeinsame Elektrode (182);

wobei der Widerstand aus mehreren Dünnfilm-Widerständen (183a,183b) zusammengesetzt ist, die so auf der gemeinsamen Elektrode (182) gebildet sind, daß sie durch ein isolierendes Material (186) in Abschnitte unterteilt sind; thermisch gut leitende Signalelektroden (184a, 184b), die auf den mehreren Dünnfilm-Widerständen (183a,183b) gebildet sind; und eine thermisch gut leitende Antiabriebschicht (185), die auf den Signalelektroden (184a,184b) gebildet ist, wodurch der Laserstrahl (180) auf einen vorbestimmten Strahldurchmesser verdichtet und für eine Abtastung mit einer vorbestimmten Geschwindigkeit verwendet wird, der verdichtete Laserstrahl (180) durch die Fenster der gemeinsamen Elektrode (182) hindurchgeht, jeder der bestrahlten Bereiche der mehreren Dünnfilme (183a,183b) mit dem Laserstrahl (180) bestrahlt wird, und Wärme erzeugt wird, und eine thermische Aufzeichnung in den mehreren Bereichen gleichzeitig durch Wärme durchgeführt werden kann.

11. System nach Anspruch 1, worin die Laserstrahl-Erzeugungsvorrichtung mehrere Lichtquellen (102a,102b,102c) zum Emittieren des Lichts entsprechend Ausgangssignalen von der Drucksignal-Erzeugungsvorrichtung (100) aufweist, und worin die Laserstrahl-Treibervorrichtung eine Vorrichtung zum Bewirken einer Hauptabtastung mit mehreren von den mehreren Lichtquellen (102a,102b,102c) emittierten Lichtstrahlen aufweist, während die mehreren Lichtstrahlen reflektierend abgelenkt werden durch Verwendung eines Reflexions-Ablenkspiegels (103), wobei das System weiterhin aufweist:
eine Vorrichtung (105a-c,106a-c) zum Druckanpassen eines Farbfilms (108), der mit Farben versehen ist, an das wärmeempfindliche Blatt (109) durch Biegen des Farbfilms (108) entsprechend der Anzahl der mehreren Lichtstrahlen; und eine Vorrichtung zum Bewirken einer Hilfsabtastung durch Tragen des Farbfilms (108) und des wärmeempfindlichen Blatts (109).

**12.** System nach Anspruch 11, worin die Vorrichtung (105a-c) zum Druckanpassen des Farbfilms (108) an das wärmeempfindliche Blatt (109) die fotothermische Wandlereinrichtung mit einem Element für hochwirksame Umwandlung der Lichtstrahlen in thermische Energie aufweist.

**13.** System nach Anspruch 11, worin, wenn die mehreren Lichtstrahlen von dem Reflexions-Ablenkspiegel (103) reflektierend abgelenkt werden, jeder der mehreren Lichtstrahlteile der Aufzeichnung entweder derselben oder einer unterschiedlichen Farbe zugewiesen ist.

**14.** System nach Anspruch 11, worin die Drucksignal-Erzeugungsvorrichtung (100) einen Videospeicher (110) zum Sammeln von von außen eingegebenen Bildsignalen, eine Farbwandlerschaltung (111) zur Farbumwandlung der eingegebenen Bildsignale, mehrere Impulsbreitenmodulatoren (112a,112b, 112c) zum Bestimmen von Impulsbreiten der von den mehreren Lichtquellen (102a,102b,102c) kommenden mehreren Lichtstrahlen durch Vergleich von Farbumwandlungs-Ausgangssignalen von der Farbwandlerschaltung (111) mit Gradationsdaten und mehrere Verzögerungsschaltungen (114a, 114b,114c) zum Verzögern jeweiliger Ausgangssignale von den mehreren Impulsbreitenmodulatoren (112a, 112b, 112c) aufweist.

**15.** System nach Anspruch 14, worin die Drucksignal-Erzeugungsvorrichtung (100) wenigstens einen Ausgangsspeicher (116a,116b), der vorgesehen ist zum Speichern jedes Verzögerungs-Ausgangssignals, das von den mehreren Verzögerungsschaltungen (114a,114b,114c) ausgegeben wird, aufweist, und worin Lese/Schreib-Operationen der Vrzögerungs-Ausgangssignale mit Bezug auf die Verzögerungs-Ausgangssignalspeicher (116a, 116b) zwischen den Verzögerungsspeichern (116a, 116b) umgewechselt werden.

**16.** System nach Anspruch 14, worin die Drucksignal-Erzeugungsvorrichtung (100) wenigstens einen Ausgangsspeicher (116a,116b) aufweist, worin Lesetakte in den Leseoperationen des Ausgangsspeichers (116a,116b) variabel sind, so daß die Größe eines aufzuzeichnenden Bildes willkürlich geändert werden kann.

**Revendications**

**1.** Système d'enregistrement d'image pour enregistrer une image souhaitée en utilisant des faisceaux laser, comprenant :

des moyens de génération de signal d'impression (61) pour émettre un signal d'enregistrement d'image ;
des moyens de génération de faisceau laser (1) pour produire un faisceau laser ;
des moyens de commande de faisceau laser (62) pour moduler le faisceau laser émis par lesdits moyens de génération de faisceau laser (1) en fonction d'un signal de sortie provenant desdits moyens de génération de signal (61) ;
des moyens de conversion photothermique (74) pour convertir le faisceau laser modulé en chaleur ;
des moyens de balayage à déviation (2, 63) pour balayer par déviation une position prédéterminée desdits moyens de conversion photothermique (74) avec le faisceau laser;
des moyens de préchauffage (70a, 70b, 71, 78) formés par une résistance (78) dans lesdits moyens de conversion photothermique (74) pour élever la température desdits moyens de conversion photothermique (74) en appliquant une puissance électrique auxdits moyens de conversion photothermique (74), et caractérisé par
des moyens (81) pour commander une température de préchauffage desdits moyens de conversion photothermique (74), de sorte qu'un transfert thermique en couleurs peut être effectué aux mêmes conditions pour chaque couleur correspondante, et un enregistrement sur une feuille thermosensible (65) peut être effectué.

**2.** Système selon la revendication 1, dans lequel lesdits moyens de conversion photothermique (74) sont composés d'une résistance (78), et une fonction de préchauffage est donnée en ajoutant des électrodes (70a, 70b) et une alimentation en énergie (71) pour fournir à ladite résistance (78) de la puissance électrique.

3. Système selon la revendication 1, dans lequel lesdits moyens de conversion photothermique (74) sont composés d'une résistance (122) comprenant au moins un matériau à coefficient de température négatif dont la valeur de résistance varie fortement en réponse à la chaleur produite par le faisceau laser (120), et un matériau photosensible et photoconducteur dont la valeur courante ou la valeur de résistance varie fortement en réponse au faisceau laser (120).

4. Système selon la revendication 1, comprenant en outre des moyens de mise en forme de faisceau laser, dans lequel ladite source de faisceau laser produit des faisceaux laser à modes multiples, et dans lequel lesdits moyens de mise en forme de faisceau laser convertissent le faisceau laser à modes multiples en un faisceau laser monomode.

5. Système selon la revendication 1, comprenant en outre des moyens pour maintenir pressé un film en couleurs appliqué avec des encres contre ladite feuille thermosensible, lesdits moyens de pressage ayant une forme convexe.

6. Système selon la revendication 1, dans lequel lesdits moyens de conversion photothermique (74) comprennent :

   une pièce de support (121) transmettant le faisceau laser (120) ;
   une première électrode (123a) formée sur ladite pièce de support (121), et composée d'un matériau qui transmet le faisceau laser ;
   une résistance à couche mince (122) formée sur ladite première électrode (123a) ;
   une deuxième électrode (123b) de bonne conductibilité thermique formée sur ladite couche mince (122) ; et
   une couche anti-abrasion (124) de bonne conductibilité thermique formée sur ladite deuxième électrode (123b), de sorte que le faisceau laser (120) est modulé en termes d'espace, de temps ou d'intensité optique en fonction d'un signal d'image, le faisceau laser modulé (120) est concentré à un diamètre prédéterminé de faisceau et utilisé pour balayer à une vitesse prédéterminée, ladite couche mince (122) est éclairée par le faisceau laser concentré, et
   de la chaleur est produite dans la portion éclairée sur ladite couche mince (122).

7. Système selon la revendication 1, dans lequel lesdits moyens de conversion photothermique (74) comprennent:

   une pièce de support (131) transmettant le faisceau laser (130) ;
   une première électrode (133a) formée sur ladite pièce de support (131), et comprenant des fenêtres à travers lesquelles passe le faisceau laser (130) ;
   une résistance (132) formée sur ladite première électrode (133a) sous forme d'une résistance à couche mince ;
   une deuxième électrode (133b) de bonne conductibilité thermique formée sur ladite résistance à couche mince (132) ; et
   une couche anti-abrasion (134) de bonne conductibilité thermique formée sur ladite deuxième électrode (133b), de sorte que le faisceau laser (130) est modulé en termes d'espace, de temps ou d'intensité optique en fonction d'un signal d'image, le faisceau laser modulé (130) est concentré à un diamètre prédéterminé de faisceau et utilisé pour balayer à une vitesse prédéterminée, le faisceau laser concentré (130) traverse chacune desdites fenêtres de ladite première électrode (133a), ladite couche mince (122) est éclairée par le faisceau laser concentré la traversant, et
   de la chaleur est produite dans la portion éclairée sur ladite couche mince (132), et un enregistrement thermique peut être effectué par la chaleur.

8. Système selon la revendication 1, dans lequel lesdits moyens de conversion photothermique (74) comprennent :

   une pièce de support (141) transmettant le faisceau laser (140) ;
   un train d'électrodes (143a, 143b) qui sont disposées dans une direction principale de balayage sur ladite pièce de support (141) de sorte que les polarités des électrodes (143a, 143b) soient alternativement différentes les unes des autres, la résistance étant formée sur lesdites électrodes ; et
   une couche anti-abrasion (144) thermiquement conductrice formée sur ladite résistance (142), de sorte que le faisceau laser (140) est modulé en termes d'espace, de temps ou d'intensité optique en fonction d'un signal d'image, le faisceau laser modulé (140) est concentré à un diamètre prédéterminé de faisceau et utilisé pour balayer à une vitesse prédéterminée, ladite résistance (142) est éclairée par le faisceau laser concentré (140), et
   de la chaleur est produite dans la portion éclairée, et un enregistrement thermique peut être effectué par la chaleur.

9. Système selon la revendication 1, dans lequel lesdits moyens de conversion photo-thermique (74) comprennent :

une pièce de support (151) transmettant le faisceau laser (161) ;
une électrode commune (152) formée sur ladite pièce de support (151) et composée d'un matériau qui transmet le faisceau laser (161) ;
la résistance étant composée d'une pluralité de résistances à couche mince (153a, 153b) formées sur ladite électrode commune (152) de manière à être coupées par un matériau isolant (156) ;
des électrodes de signal (154a, 154b) de bonne conductibilité thermique formées respectivement sur ladite pluralité de résistances à couche mince (153a, 153b) ; et
une couche anti-abrasion (155) de bonne conductibilité thermique formée sur lesdites électrodes de signal (154a, 154b), de sorte que le faisceau laser (161) est concentré à un diamètre prédéterminé de faisceau et utilisé pour balayer à une vitesse prédéterminée, chacune de ladite pluralité de résistances à couche mince (153a, 153b) est éclairée par le faisceau laser concentré (161) ; et
de la chaleur est produite, et un enregistrement thermique sur ladite pluralité de régions peut être effectué simultanément par la chaleur.

10. Système selon la revendication 1, dans lequel lesdits moyens de conversion photothermique (74) comprennent ;

une pièce de support (181) transmettant le faisceau laser (180) ;
une électrode commune (182) formée sur ladite pièce de support (181) et comprenant des fenêtres à travers lesquelles passe le faisceau laser (180) ;
la résistance étant composée d'une pluralité de résistances à couche mince (183a, 183b) formées sur ladite électrode commune (182) de manière à être coupées par un matériau isolant (186) ;
des électrodes de signal (184a, 184b) de bonne conductibilité thermique formées sur ladite pluralité de résistances à couche mince (183a, 183b) ; et
une couche anti-abrasion (185) de bonne conductibilité thermique formée sur lesdites électrodes de signal (184a, 184b), de sorte que le faisceau laser (180) est concentré à un diamètre prédéterminé de faisceau et utilisé pour balayer à une vitesse prédéterminées, le faisceau laser concentré (180) traverse chacune desdites fenêtres de ladite électrode commune (182), chacune des portions de ladite pluralité de résistances à couche mince (183a, 183b) est éclairée par le faisceau laser (180) ; et
de la chaleur est produite, et un enregistrement thermique sur une pluralité de régions peut être effectué simultanément par la chaleur.

11. Système selon la revendication 1, dans lequel lesdits moyens de génération de faisceau laser comprennent une pluralité de sources de lumière (102a, 102b, 102c) pour émettre la lumière en fonction de signaux de sortie provenant desdits moyens de génération de signal d'impression (100), et dans lequel lesdits moyens de commande de faisceau laser comprennent des moyens pour effectuer un balayage principal avec une pluralité de faisceaux lumineux émis de ladite pluralité de sources de lumière (102a, 102b, 102c) tout en déviant par réflexion la pluralité de faisceaux lumineux en utilisant un miroir (103) de déviation par réflexion,
ledit système comprend en outre :

des moyens (105a-c, 106a-c) pour presser un film en couleurs (108) enduit avec des encres contre ladite feuille thermosensible (109) en pliant ledit film en couleurs (108) en fonction du nombre de la pluralité de faisceaux de lumière ; et
des moyens pour effectuer un balayage auxiliaire en transportant ledit film en couleurs (108) et ladite feuille thermosensible (109).

12. Système selon la revendication 11, dans lequel lesdits moyens (105a, 105b, 105c) pour presser ledit film en couleurs (108) contre ladite feuille thermosensible (109) comprennent lesdits moyens de conversion photothermique ayant une pièce pour une conversion à rendement élevé des faisceaux lumineux en une énergie thermique.

13. Système selon la revendication 11, dans lequel la pluralité de faisceaux de lumière sont déviés par réflexion par ledit miroir (103) de déviation par réflexion, chacune de la pluralité de parties de faisceaux de lumière se voit attribuer un enregistrement soit de la même couleur, soit d'une couleur différente.

14. Système selon la revendication 11, dans lequel lesdits moyens de génération de signaux d'impression (100) comprennent une mémoire vidéo (110) pour accumuler des signaux d'image envoyés de l'extérieur, un circuit de conversion de couleur (111) pour une conversion de couleur desdits signaux envoyés d'image, une pluralité de modulateurs de largeur d'impulsion (112a, 112b, 112c) pour déterminer des largeurs d'impulsion des faisceaux lumineux provenant de ladite pluralité de sources de lumière (102a, 102b, 102c) en comparant les sorties de conversion de couleur dudit circuit de conversion de couleur (111) avec des données de gradation, et une pluralité de circuits de retard (114a, 114b, 114c) pour retarder des signaux correspondants émis par ladite pluralité de modulateurs de largeur d'impulsion (112a, 112b, 112c).

15. Système selon la revendication 14, dans lequel lesdits moyens de génération de signal d'impression (100) comprennent au moins une mémoire de sortie (116a, 116b) prévue pour stocker chaque sortie de retard produites par ladite pluralité de circuits de retard (114a, 114b, 114c), et dans lequel des opérations de lecture-écriture des sorties de retard par rapport auxdites mémoires de sortie de retard sont permutées entre lesdites mémoires de sortie de retard (116a, 116b).

16. Système selon la revendication 14, dans lequel lesdits moyens de génération de signal d'impression (100) comprennent au moins une mémoire de sortie (116a, 116b) dans laquelle des signaux d'horloge dans les opérations de lecture de la mémoire de sortie sont variables, de sorte que la taille d'une image à enregistrer peut être modifiée à volonté.

Fig. 1 (PRIOR ART)

# Fig.2(a)
(PRIOR ART)

# Fig.2(b)
(PRIOR ART)

# Fig.2(c)
(PRIOR ART)

# *Fig.3*

## (PRIOR ART)

23c

25

22

20          21          23b

*Fig.4* (PRIOR ART)

Fig. 5

Fig.6 (a)

64

Fig.6 (b)

64

69
68
67

Fig. 7

74

70a

79

78

POWER
SUPPLY

71

77

70b

Fig.8

EP 0 435 284 B1

Fig. 9

## Fig.10

C          M          Y          C

## Fig.11

Fig.12

Fig.13

# Fig.14

EP 0 435 284 B1

# *Fig.15*

# *Fig.16*

# Fig.17 (a)

# Fig.17 (b)

# Fig.18

# Fig.19

# Fig.20

# Fig.21

# Fig.22

# Fig.23

EP 0 435 284 B1

# Fig.24

144

142

143b

143a

141

X

# Fig.25(a)

# Fig.25(b)

# Fig.26(a)

165

B

171

170

# Fig.26(b)

170

153a

154a

152

176

154b

153b

5

# Fig.27